# EUROPÄISCHE PATENTANMELDUNG

(11) **EP 4 057 201 A1**
(43) Veröffentlichungstag der Anmeldung: **14.09.2022**
(21) Anmeldenummer: 22161655.0
(22) Anmeldetag: 11.03.2022
(51) Int. Cl.: G06Q 20/06, G06Q 20/08, G06Q 20/32, G06Q 20/36, G06Q 20/38, G07F 7/02, G07F 7/06

(54) **BEREITSTELLEN UND BEZIEHEN EINES PFANDGUTS MIT EINEM IDENTIFIZIERER**

(30) Priorität: 12.03.2021 AT 501792021
(71) Anmelder: Saubermacher Dienstleistungs AG, 8073 Feldkirchen bei Graz (AT)
(72) Erfinder: Heigl, Michaela, 8200 Hofstätten an der Raab (AT); Opelt, Andreas, 8047 Graz (AT); Ketzler, Georg, 1170 Wien (AT)
(74) Vertreter: Dilg, Haeusler, Schindelmann Patentanwaltsgesellschaft mbH

(57) **Zusammenfassung**

Die vorliegende Erfindung betrifft eine Anordnung und ein Verfahren zum Verwalten von Identifizierern (104), welche indikativ für Pfandgüter (105) sind. Ein Pfandgut (105), oder ein Produkt (401), welches das Pfandgut (104) enthält, wird bereitgestellt und ein Identifizierer (104) von einer Steuereinrichtung (103) gegen Entrichtung eines Pfandwerts der indikativ für eine Pfandkategorie des Pfandguts (105) ist, bezogen, so dass der Identifizierer (104) die Pfandkategorie des Pfandguts (105) speichert. Der Identifizierer (104) wird mit dem Pfandgut (105) oder dem Produkt (401) bei Bezug des Pfandguts (105) durch einen Benutzer (110) bezogen. Das Pfandgut(105) bzw. das Produkt (401), das das Pfandgut (105) enthält, wird mit dem bezogen Identifizierer (104) an den Benutzer (110) übergeben.

## Beschreibung

### Technisches Gebiet

Die Erfindung betrifft ein Verfahren zum Verwalten von Identifizierern, welche indikativ für Pfandgüter sind, eine Anordnung sowie ein computerlesbares Speichermedium und ein Programm-Element.

### Hintergrund der Erfindung

In einem Pfandsystem werden werthaltige und recyclebare Pfandgüter oder Pfandgüter, die, wenn unsachgemäß entsorgt, Schaden verursachen können, gekennzeichnet, sodass diese später an geeigneten Rücknahmestellen zurückgegeben werden können. Dabei werden die Pfandgüter mit einem Pfandwert belegt, sodass der Benutzer einen Anreiz hat, dass Pfandgut gegen Auszahlung einer Pfandgutschrift zurückzuerhalten. Somit können werthaltige und recycelbare Pfandgüter an Rücknahmestellen gesammelt und zum weiteren Recycling verwendet werden.

Es ist immer noch schwierig, die Verwaltung von Pfandgütern effizient, missbrauchssicher, mit hohem Benutzerkomfort und mit vertretbarem Aufwand durchzuführen.

### Darstellung der Erfindung

Es ist eine Aufgabe der vorliegenden Erfindung, die Verwaltung von Pfandgütern effizient, betrugssicher, benutzerfreundlich und mit vertretbarem Aufwand durchzuführen.

Diese Aufgabe wird durch ein Verfahren zum Verwalten von Identifizierern, welche indikativ für Pfandgüter sind, eine Anordnung sowie ein computerlesbares Speichermedium und ein Programm-Element mit den Merkmalen gemäß den unabhängigen Patentansprüchen gelöst.

Gemäß einem ersten Aspekt der vorliegenden Erfindung wird ein Verfahren zum Verwalten von Identifizierern, welche indikativ für Pfandgüter sind, beschrieben. Gemäß dem Verfahren wird zunächst ein Pfandgut bereitgestellt. Von einer Steuereinrichtung wird zudem ein Identifizierer bezogen gegen Entrichtung eines Pfandwerts der indikativ für eine Pfandkategorie des Pfandguts ist, so dass der Identifizierer die Pfandkategorie des Pfandguts speichert. Der Identifizierer wird mit dem Pfandgut bezogen bei Bezug (z.B. bei Kauf, Abschluss des Kaufvertrags, (Online-)Bestellung) des Pfandguts durch einen Benutzer. Ferner wird eine Berechtigung an dem Pfandgut zusammen mit dem bezogenen Identifizierer an den Benutzer übergeben.

Gemäß einem weiteren Aspekt der vorliegenden Erfindung wird eine Anordnung zum Verwalten von Identifizierern, welche indikativ für Pfandgüter sind, beschrieben. Die Anordnung weist eine Bereitstellungseinrichtung zum Bereitstellen des Pfandguts auf. Ferner weist die Anordnung eine (insbesondere zentrale) Steuereinrichtung auf, welche zumindest einen Identifizierer bereitstellt und verwaltet. Die Steuereinrichtung ist konfiguriert gegen Entrichtung eines Pfandwerts den Identifizierer bereitzustellen, wobei der Identifizierer indikativ für eine Pfandkategorie des Pfandguts ist, so dass der Identifizierer die Pfandkategorie des Pfandguts speichert. Die Anordnung weist ferner eine Bezugseinrichtung auf, die mit der Bereitstellungseinrichtung und der Steuereinrichtung gekoppelt ist zum Bezug des Pfandguts und des Identifizierers, wobei die Bezugseinrichtung konfiguriert ist zum Beziehen des Identifizierers mit dem Pfandgut bei Bezug des Pfandguts durch einen Benutzer. Ferner weist die Anordnung eine Übergabeeinrichtung zur Übergabe einer Berechtigung an dem Pfandgut mit dem bezogenen Identifizierer an den Benutzer auf.

In einem computerlesbaren Speichermedium gemäß einem Ausführungsbeispiel der vorliegenden Erfindung ist ein Programm zum Verwalten von Identifizierer, welche indikativ für das Pfandgut sind, gespeichert, welches Programm, wenn es von einem oder mehreren Prozessoren (zum Beispiel des Nutzer-Endgeräts, der koppelbaren Steuereinrichtung, der Bereitstellungseinrichtung, der Bezugseinrichtung und/oder der Übergabeeinrichtung) ausgeführt wird, die oben beschriebenen Verfahrensschritte oder einen Teil davon steuert bzw. durchführt.

Ein Programm-Element (Computerprogramm-Element) gemäß einem Ausführungsbeispiel der vorliegenden Erfindung zum Verwalten von Identifizierer, welche indikativ für das Pfandgut sind, weist die oben beschriebenen Verfahrensschritte auf (bzw. führt diese durch), wenn es von einem oder mehreren Prozessoren (zum Beispiel des Nutzer-Endgeräts, der koppelbaren Steuereinrichtung, der Bereitstellungseinrichtung, der Bezugseinrichtung und/oder der Übergabeeinrichtung) ausgeführt wird. Zum Beispiel kann das Programm-Element als App ausgebildet sein, die von dem Nutzer-Endgerät über ein Kommunikationsnetzwerk von einem Server heruntergeladen und dann darauf ausgeführt werden kann. Das Programm-Element kann einzelne Teilelemente aufweisen, die an unterschiedlichen Prozessoren ausgeführt werden. Auch die Steuereinrichtung, der Bereitstellungseinrichtung, die Bezugseinrichtung und/oder die Übergabeeinrichtung kann mit einer entsprechenden Software ausgestattet werden.

Ausführungsbeispiele der vorliegenden Erfindung können sowohl mittels eines Computerprogramms, d.h. einer Software, als auch mittels einer oder mehrerer spezieller elektrischer Schaltungen, das heißt in Hardware, oder in beliebig hybrider Form, das heißt mittels Software-Komponenten und Hardware-Komponenten, realisiert werden. Insbesondere kann bei einem Ausführungsbeispiel der Erfindung die Software zumindest teilweise auch als App, d.h. als downloadbare und dann installierbare Software-Applikation, insbesondere für das Nutzer-Endgerät, ausgebildet sein.

Im Rahmen der vorliegenden Erfindung kann unter dem Begriff "Pfandgut" insbesondere ein Körper oder eine Mehrzahl von Körpern verstanden werden, der oder die zeitweise für eine vorbestimmte Verwendung eingesetzt wird oder werden und nach Verwendung entsorgt bzw. zurückgegeben (z.B. ähnlich wie ein Mieten eines Körpers) werden soll oder sollen. Um einen Benutzer zu motivieren, die Entsorgung bzw. Rückgabe durchzuführen, kann die Ausgabe des Pfandguts an die Entrichtung einer Pfandgebühr bzw. Pfandwert gekoppelt werden, die bei Rückgabe oder Entsorgung des Pfandguts an den Benutzer ganz oder teilweise sowie in identischer Weise (zum Beispiel als ausgezahlter Geldbetrag) oder in Form eines Surrogats (zum Beispiel in Form der Ausgabe eines neuen Pfandguts oder eines Gutscheins bzw. einer Gutschrift) zurückentrichtet wird. Beispielsweise kann das Pfandgut eine Pfandflasche (insbesondere eine PET-Pfandflasche), eine Pfanddose, ein Behälter (insbesondere ein Getränkekasten), eine Batterie, eine Textilie, ein Möbel, eine Pfandverpackung, ein Kraftfahrzeug, eine quaderförmige Verpackung für flüssige Nahrungsmittel oder für niederviskose Nahrungsmittel (zum Beispiel ein Tetrapak) ein Verpackungsgebinde, eine Euro-Palette und/oder ein Elektrogerät (insbesondere ein Elektroaltgerät) sein oder aufweisen. Wie unten näher erläutert, kann das Pfandgut in einem Produkt eingebaut werden und das Produkt mit dem Pfandgut zusammen bezogen werden.

Eine Pfandkategorie beschreibt eine bestimmte Ausführungsart bzw. intrinsische Eigenschaft oder eine bestimmte Spezifikation des Pfandguts. Die Pfandkategorie weist einen oder eine Vielzahl von verschiedenen Produktparametern zur Einstufung bzw. einer Definition eines Pfandguts auf, für welches der Identifizierer zuzuordnen ist. Die Pfandkategorie kann beispielsweise eine Produktart bzw. Produktkategorie des Pfandguts definieren und zudem weitere Parameter, wie beispielsweise die Leistung, Inhaltsstoffe, etc. Im Falle einer Batterie als Pfandgut kann als Pfandkategorie beispielsweise kategorisieren werden, ob es sich bei der Batterie um eine Lithium-Ionen Batterie, um eine bleihaltige Batterie, allgemein um eine aufladbare Batterie oder eine nicht aufladbare Batterie handelt. Zudem kann die Pfandkategorie weiter den Parameter die Energiedichte bzw. Kapazität eines Pfandgut (beispielsweise eine Batterie) definieren. Ferner kann die Pfandkategorie beispielsweise Dimensionen, wie die Größe, das Volumen, die Länge oder die Breite eines Pfandguts (beispielsweise einer Pfandflasche) definieren. Ferner können in der zugeordneten Pfandkategorie eines Pfandguts Inhaltsstoffe, beispielsweise bestimmte recycelbare Wertstoffe, den Werts des Produkts, in dem das Pfandgut eingebaut ist, oder Gefahrenstoff, kategorisieren werden. Der Identifizierer, welcher die Pfandkategorie des bezogenen Pfandguts speichert, gibt basierend auf der Pfandkategorie einen bestimmten Pfandwert vor. Der Identifizierer mit der gespeicherten Pfandkategorie ist somit indikativ für den Pfandwert des Pfandguts. So ist es beispielsweise möglich, dass eine Batterie mit einer hohen Energiedichte bzw. Kapazität, die in einer entsprechenden Pfandkategorie zugeordnet ist, mit einem höheren Pfandwert zu belegen ist als eine Batterie mit einer geringeren Energiedichte bzw. Kapazität. Aufgrund des Bezugs des Identifizierers mit dem Pfandgut und der in dem Identifizierer gespeicherten Pfandkategorie kann somit der entsprechende Pfandwert dem Pfandgut zugeordnet werden. Dabei ist der Identifizier nicht an das tatsächlich bezogenen Pfandgut verknüpft, sondern gibt die Pfandkategorie vor, zu welcher das bezogene Pfandgut zuzuordnen ist.

Im Rahmen der vorliegenden Erfindung kann unter dem Begriff "Steuereinrichtung" insbesondere eine Entität verstanden werden, die Prozessorressourcen und Speicherressourcen aufweist. Der Prozessor kann zum Abarbeiten einer in einem Speicher gespeicherten Software ausgebildet sein und kann (zum Beispiel Verwalten und Bereitstellen von Identifizierer mit einer bestimmten Produktkategorie, zum Aktivieren eines Identifizierers indikativ für das Pfandgut und/oder zum Durchführen einer Pfandgutschrift) auf die Speicherressourcen zugreifen. Beispielsweise kann die Steuereinrichtung ein Computer, insbesondere ein Server-Computer, sein. Beispielsweise kann die Steuereinrichtung in einem Kommunikationsnetzwerk einer Bereitstellungseinrichtung, einer Bezugseinrichtung, einer Übergabeeinrichtung, einer Rückgabeeinrichtung und/oder mit einem Nutzer-Endgerät als Master fungieren, wohingegen die anderen verbundenen Einrichtungen als Slave(s) fungieren können. Die Steuereinrichtung kann auch ausgebildet sein, mit einer Vielzahl von Einrichtungen und/oder Nutzer-Endgeräten zu kommunizieren und/oder diese zu steuern.

Im Rahmen der vorliegenden Erfindung kann unter dem Begriff "Identifizierer" insbesondere eine physische Struktur verstanden werden, die mit dem Pfandgut körperlich verbunden oder verbindbar sein kann und zur (vorzugsweise eindeutigen) Identifizierung einer Pfandkategorie eines bestimmten Pfandguts (z.B. einer bestimmten Gruppe von Pfandgütern) dienen kann. Beispielsweise kann ein solcher Identifizierer ein zweidimensionaler QR-Code, ein eindimensionaler Barcode oder Strichcode, ein Transponder (zum Beispiel ein RFID (radio frequency identification)-Tag oder NFC (near field identification)-Tag) und/oder ein alphanumerischer Code (d.h. eine Abfolge von Buchstaben und/oder Ziffern und/oder anderen Zeichen) sein. Andere Identifizierer, die insbesondere elektrisch und/oder elektromagnetisch (zum Beispiel optisch) erkennbar oder auslesbar sein können, können gemäß exemplarischen Ausführungsbeispiel der Erfindung ebenfalls implementiert werden.

Dabei kann der Identifizierer als Klebeetikett ausgebildet werden. Das Klebeetikett als Identifizierer kann insbesondere einen sogenannten "Void"-Effekt aufweisen. Dabei wird die Klebeverbindung mit dem Pfandgut durch Anbringen des Identifizierers auf dem Pfandgut derart fest ausgebildet, das Entfernen des Identifizierers vom Pfandgut zu einer Zerstörung des Identifizierers führt und das Klebeetikett bzw. der Identifizierer seine Gültigkeit verliert. Somit wird ein Diebstahlschutz bzw. Betrugsschutz geschaffen.

Der Identifizierer weist beispielsweise einen auslesbaren Identifizierungscode, beispielsweise einen QR-Code auf, der von der zentralen Steuereinrichtung generiert wird und von den Einrichtungen des Verfahrens bzw. der Anordnung (zum Beispiel der Bezugseinrichtung, der Übergabeeinrichtung und/oder der Rückgabeeinrichtung) zum Verwalten von Identifizierer, welche indikativ für das Pfandgut sind, ausgelesen werden kann. Beispielsweise kann der Identifizierter als Etikett ausgebildet sein, welches einen eindeutigen QR-Code aufweisen kann, der von der Steuereinrichtung an die Bezugseinrichtung gesandt wird. Ferner kann der Identifizierer eine aufgedruckte Anleitung zur Verwendung des Identifizierer aufweisen. Beispielsweise kann der Identifizierer einen Link auf eine Online- Anleitung aufweisen. Somit ist in einer beispielhaften Ausführungsform der Identifizierer ausgewählt aus einer Gruppe bestehend aus einem QR-Code, einem Barcode, einem Transponder, insbesondere einem RFID-Tag, und einem alphanumerischen Code.

Im Rahmen der vorliegenden Erfindung kann unter dem Begriff "Identifizierer" insbesondere auch eine virtuelle Struktur (zum Beispiel ein Datensatz bzw. Tag) verstanden werden, die zwischen den Einrichtungen und insbesondere der Steuereinrichtung logisch bzw. datentechnisch zugeordnet sein kann und zur Identifizierung des Pfandguts und der zugehörigen Pfandkategorie dienen kann. Zum Beispiel kann ein solcher Identifizierer ein Datensatz (zum Beispiel gespeichert in der Steuereinrichtung und/oder in dem Nutzer-Endgerät) sein.

Beispielsweise können neben Informationen über die Pfandkategorie ebenfalls Informationen zur Bezugseinrichtung (d. h. den Produzenten oder Händler), dem Bezugs- oder Übergabedatum des Pfandguts an den Benutzer, dem Bezugsdatum, zu welchem die Bezugseinrichtung den Identifizierer von der Steuereinrichtung bezog, und/oder dem Ort der Übergabe der Berechtigung an dem Pfandgut auf den Benutzer gespeichert werden.

Als Bereitstellungseinrichtung kann insbesondere der Herstellort bzw. Bereitstellungsort (d. h. bei dem Herstellort des Pfandguts oder einem Zwischenhändler) verstanden werden, von wo aus das Pfandgut an den Ort der Bezugseinrichtung geliefert wird.

Als Bezugseinrichtung wird eine Einrichtung an einem Ort verstanden, an welchem das Pfandgut mit einem Identifizierer bezogen wird. Die Bezugseinrichtung stellt insbesondere die Entität dar, von welcher der Benutzer das Pfandgut bezieht. Ein Bezug des Benutzers bedeutet vorliegend, dass ein Kauf, d. h. ein Abschluss eines Kaufvertrags, oder eine Bestellung durch den Benutzer an der Bezugseinrichtung vorgenommen wird. Die Bezugseinrichtung kann somit an dem Verkaufsort, beispielsweise bei dem Ladengeschäft oder in dem Online Kaufhaus, vorgesehen sein, bei welchen der Benutzer das Pfandgut bezieht. Die Bezugseinrichtung gibt somit das Pfandgut mit dem Identifizierer und entsprechend der zum Pfandgut zugehörigen Pfandkategorie bei bzw. nach Bezug durch den Benutzer aus.

Die Steuereinrichtung dient als zentrale Ausgabe- und Verwaltungsstelle der Identifizierer, sodass von der Steuereinrichtung Identifizierer einer bestimmten Pfandkategorie seitens der Bezugseinrichtung, d. h. beispielsweise von dem Händler bzw. Verkäufer, gegen die Zahlung eines Pfandwerts bezogen werden können. Die Steuereinrichtung verwaltet Identifizierer dahingehend, dass ausgegebene Identifizierer bestimmt sind und deren Status gespeichert wird, d. h. ob ein Identifizierer aktiviert oder deaktiviert ist. Bei einem aktivierten Identifizierer ist ein Pfandwert gezahlt worden und das Pfandgut noch nicht zurückgegeben worden. Ferner ist der Identifizierer deaktiviert, wenn ein Pfandgut mit einem passenden Identifizierer bereits zurückgegeben wurde und eine Rückzahlung des Pfandwerts veranlasst wurde. Zudem kann beispielsweise der Identifizier bereits bei Übergabe von der Steuereinrichtung auf die Bezugseinrichtung, also vor Bezug durch den Benutzer, einen aktiven Pfandstatus aufweisen. Die Steuereinrichtung verwaltet somit eine Vielzahl von Identifizierern und insbesondere eine Vielzahl von Identifizierern unterschiedlicher Pfandkategorien. Durch die Verwaltung der zugehörigen aktivierten und deaktivierten Status steuert die Steuereinrichtung ebenfalls, ob die Auszahlung bzw. Rückzahlung des Pfandwerts bei Rückgabe des Pfandguts möglich ist.

Der Händler bzw. Verkäufer aufweisend die Bezugseinrichtung kann von der Steuereinrichtung, d. h. der zentralen Verwaltungsstelle für Identifizierer, bei Bezug des Pfandguts durch den Benutzer, einen, für das Pfandgut passenden Identifizierer (d.h. mit entsprechender Pfandkategorie) beziehen. Die Bezugseinrichtung gibt den für das Pfandgut zugeordneten Identifizierer aus und übergibt über eine Übergabeeinrichtung (beispielsweise in dem Ladengeschäft oder eingerichtet in dem Transportunternehmen bei einem Online-Kauf) das Pfandgut zusammen mit dem Identifizierer indikativ für die passende Pfandkategorie. Der Identifizierer kann mit dem Pfandgut befestigt werden oder lose bzw. getrennt voneinander an den Benutzer übergeben werden. Pro Pfandgut ist insbesondere ein Identifizierer zu beziehen und entsprechend eine Pfandabfuhr möglich.

Nach Übergabe der Berechtigung an einem Pfandgut erhält der Benutzer somit ebenfalls die Berechtigung an dem bezogenen Identifizierer, welcher indikativ für die Pfandkategorie ist. Bei Rückgabe des Pfandguts zusammen mit dem Identifizierer (d.h. durch Verknüpfung des Identifizierers mit dem Pfandgut bei Rückgabe), welcher die korrekte Pfandkategorie des Pfandguts aufweist, kann der Pfandwert passend zu der im Identifizierer bestimmten Pfandkategorie zurückgezahlt werden. Der Pfandwert wird in der Regel bei Bezug des Benutzers von der Bezugseinrichtung als Aufschlag auf den Wert des Pfandguts bzw. des Produkts, in dem das Pfandgut verbaut ist, bezahlt.

Beim konventionellen Verwalten von Pfandgütern werden pauschal Pfandetiketten auf Produkten, wie beispielsweise Pfandflaschen, aufgedruckt. Gemäß dem Ansatz der vorliegenden Erfindung werden Identifizierer zentral von einer Steuereinrichtung verwaltet und gegen Bezahlung eines Pfandwerts unabhängig vom Pfandgut ausgegeben. Die Verknüpfung mit dem bepfandeten Produkt bzw. Pfandgut und dem Identifizierer findet beispielsweise erst bei Rückgabe des Pfandguts durch den Benutzer statt. Somit wird eine zentrale Verwaltung und Kontrolleinheit geschaffen, sodass gezielt verschiedene Produkte mit verschiedenen Pfandkategorien belegt werden können, die individuell bei Bezug des Benutzers mit dem entsprechenden Pfandgut ausgegeben werden. Somit wird eine zentral kontrollierbares und verwaltbares Pfandsystem für verschiedenste Pfandgüter geschaffen. Eine Verknüpfung des bepfandeten Produkts bzw. Pfandguts und mit dem Identifizierer ist beispielsweise erst zum Zeitpunkt der Rückgabe des Pfandguts durch den Benutzer notwendig, da dann für eine Auszahlung des Pfandwerts geprüft wird, ob ein aktiver Identifizierer mit dem zurückgegebenen Pfandgut, das der im Identifizierer gespeicherten Pfandkategorie entspricht, vorliegt.

Gemäß der vorliegenden Erfindung kann somit der Hersteller bzw. Produzent aufweisend die Bereitstellungseinrichtung das Pfandgut, auf welchem beispielsweise die Produktdaten aufgedruckt sind oder mit dem Pfandgut mitgeliefert werden, an die Bezugseinrichtung, wie beispielsweise dem Händler bzw. Verkäufer bereitstellen. Somit sind beispielsweise von dem Pfandgut der Hersteller, die Produktkategorie, die Inhaltsstoffe oder beispielsweise die Gefahrenklassifikation bekannt. Die Bezugseinrichtung bezieht das Pfandgut vom Hersteller und bezieht zudem gegen Entrichtung eines Pfandwerts von der Steuereinrichtung einen Identifizierer mit der zum Pfandgut passenden Pfandkategorie. Die Bezugseinrichtung bzw. der Händler kann dabei für ein Pfandgut oder für eine Vielzahl von Pfandgütern gleichzeitig mehrere Identifizierer von der Steuereinrichtung beziehen. Der Identifizierer kann physisch mit dem Pfandgut verknüpft werden, wie beispielsweise als Klebeetikett auf dem Pfandgut aufgeklebt werden, oder physisch getrennt jedoch zusammen mit dem Pfandgut an den Benutzer übergeben werden. Bestimmte Richtlinien bzw. gesetzliche Vorgaben können den Verkauf eines Pfandguts ohne zugehörigen Identifizierer untersagen.

Der Benutzer erwirbt die Berechtigung an dem Pfandgut zusammen mit dem bezogenen Identifizierer und bezahlt entsprechend den Pfandwert an die Bezugseinrichtung. Der Benutzer erhält dabei ebenfalls den Identifizierer indikativ für eine Pfandkategorie, die dem erworbenen Pfandgut entspricht. Der Benutzer kann den Identifizierer selbst auf das Pfandgut aufkleben oder getrennt bis zur Rückgabe des Pfandguts aufbewahren. Beispielsweise kann ein Nutzer-Endgerät, wie beispielsweise ein Mobiltelefon, eingesetzt werden, um den Identifizierer zu scannen bzw. zu fotografieren und somit im Nutzer-Endgerät zu verwahren. Beispielsweise kann das Nutzer-Endgerät über eine Kommunikationseinrichtung mit der Steuereinrichtung verknüpft sein, um die Berechtigung des Benutzers an dem Identifizierer zu verwalten. Beispielsweise kann in dem Nutzer-Endgerät eine bestimmte App (Applikation), sozusagen eine Pfandapp, gespeichert sein, die softwaretechnisch eine Kommunikation und ein Verwalten mit der Steuereinrichtung steuert. Mit dem erfindungsgemäßen Verfahren und der Anordnung kann somit ein Verwalten von Identifizierern bei analogen Vorort Käufen sowie bei Onlinekäufen implementiert werden. Ferner kann der Identifizierer zwischen Benutzern ausgetauscht bzw. übergeben werden. Beispielsweise kann ein Pfandgut bzw. ein Produkt mit einem Pfandgut zusammen mit einem, der Pfandkategorie entsprechenden Identifizierer von einem Benutzer auf einen anderen Benutzer übergeben werden. Beispielsweise kann der Identifizierer von einem Nutzer-Endgerät auf ein anderes Nutzer-Endgerät übertragen werden.

Alternativ kann ebenfalls der Hersteller des Pfandguts oder der Hersteller des Produkts, das das Pfandgut enthält, die Bereitstellungseinrichtung und die Bezugseinrichtung aufweisen. Der Hersteller des Pfandguts oder der Hersteller des Produkts, das das Pfandgut enthält, kann durch Herstellen des Pfandguts dieses bereitstellen und die zugehörigen Identifizierer gegen Entrichtung eines Pfandwerts von der zentralen Steuereinrichtung beziehen. Der Hersteller des Pfandguts oder der Hersteller des Produkts, das das Pfandgut enthält, übergibt das Pfandgut mit dem zugehörigen Identifizierer und die Berechtigung an dem Pfandgut mit dem Identifizierer an einen Händler mit einer Zwischeneinrichtung, bzw. einer Händler-Übergabeeinrichtung, von der wiederum der Benutzer das Pfandgut zusammen mit dem zugehörigen Identifizierer gegen Zahlung eines Pfandwerts bezieht.

Mit der Anordnung und dem entsprechendem (softwarebasiertem und computerimplementierbarem) Verfahren kann eine zentrale transparente und digitale Verwaltung der Pfandzahlung, Pfandrückzahlung und Entsorgung bereitgestellt werden. Mit Vorteil sind eine solche Anordnung und ein solches Verfahren mit sehr geringem Aufwand implementierbar. Für einen Benutzer kann ein einfaches und unkompliziert bedienbares Pfandsystem bereitgestellt werden, das benutzerseitig mit einem Mobilfunkgerät oder dergleichen unterstützt werden kann, auf dem beispielsweise eine App zum Verwalten von Identifizierern installiert werden kann.

Gemäß einer weiteren beispielhaften Ausführungsform werden eine Vielzahl von Identifizierer von der Steuereinrichtung gegen Entrichtung eines Pfandwerts der Indikativ für eine Pfandkategorie des Pfandguts bezogen. Bei Bezug des Pfandguts durch den Benutzer wird einer der Vielzahl von Identifizierer mit dem Pfandgut bezogen. Der Hersteller oder Händler aufweisend die Bezugseinrichtung kann somit auch vor Bezug eines Pfandguts durch den Benutzer eine Vielzahl von Identifizierern von der Steuereinrichtung beziehen und dann erst einzeln bei Bezug durch den Benutzer einen dieser Identifizierer mit dem Pfandgut übergeben. Somit kann eine einfache Verwaltung an der Bezugseinrichtung bereitgestellt werden, da in einer einmaligen Aktion eine Vielzahl von Identifizierern von der Steuereinrichtung bezogen werden kann. Es ist somit nicht notwendig, dass bei jedem Bezug durch einen Benutzer eine Kommunikation mit der Steuereinrichtung notwendig ist.

Die Anzahl der Identifizierer (z.B. Pfandetiketten) und Produkte (Pfandgüter) ist somit unabhängig voneinander. Somit ist eine Vorfinanzierung durch den Händler nur für tatsächliche Absatzmengen notwendig.

Gemäß einer weiteren beispielhaften Ausführungsform wird bei oder nach Übergabe der Berechtigung an dem Pfandgut mit dem bezogenen Identifizierer an den Benutzer der Identifizierer an dem Pfandgut, insbesondere mittels Klebens, an dem Pfandgut befestigt. Somit kann das Risiko eines Verlusts des Identifizierers während der Benutzung des Pfandguts (z.B. über mehrere Jahre) reduziert werden.

Gemäß einer weiteren beispielhaften Ausführungsform liegt bei oder nach Übergabe der Berechtigung an dem Pfandgut mit dem bezogenen Identifizierer an den Benutzer der Identifizierer (physikalisch) getrennt bzw. lose von dem Pfandgut vor. Somit besteht die Möglichkeit, dass der Benutzer eine anderes Pfandgut jedoch mit derselben Pfandkategorie zusammen mit dem bezogenen Identifizierer zurückgeben kann.

Gemäß einer weiteren beispielhaften Ausführungsform wird bei oder nach Übergabe der Berechtigung an dem Pfandgut mit dem bezogenen Identifizierer an den Benutzer der Identifizierer in einem Nutzer-Endgerät gespeichert. Der (virtuelle) Identifizierer, welcher mit dem Pfandgut bezogen wurde, kann virtuell von der Bezugseinrichtung auf das Nutzer-Endgerät des Benutzers übergeben werden. Über Kommunikation mit der Steuereinrichtung wird die Übergabe von der Bezugseinrichtung auf den Benutzer bzw. dessen Nutzer-Endgerät verwaltet und gespeichert. Ferner kann der (gegenständliche) Identifizierer, beispielsweise als Etikett mit QR-Code ausgebildet, von dem Nutzer-Endgerät des Benutzers gescannt bzw. fotografiert werden und entsprechend gespeichert werden. Der Identifizierer kann ferner digital übermittelt werden und im Anschluss z.B. ausgedruckt werden. Der Benutzer kann dann den Identifizierer an dem Pfandgut befestigen (z.B. mittels Klebens). Alternativ kann der Identifizierer ferner digital übermittelt werden und von dem Benutzer digital auf dem Nutzer-Endgerät (z.B. in einer Benutzer-App) gespeichert werden.

Im Rahmen der vorliegenden Erfindung kann unter dem Begriff "Nutzer-Endgerät" insbesondere ein elektronisches Gerät verstanden werden, das ein Benutzer bedienen kann. Ein solches Nutzer-Endgerät ist vorzugsweise kommunizierfähig in einem Kommunikationsnetzwerk betreibbar. Insbesondere ist das Nutzer-Endgerät über das Kommunikationsnetzwerk mit der Steuereinrichtung und beispielsweise mit den weiteren Einrichtungen erfindungsgemäßen Anordnung kommunizierfähig. Weiter ist bevorzugt, dass ein Nutzer-Endgerät eine Ressource zum Erkennen eines Identifizierers aufweist, insbesondere einen Scanner. Weiter insbesondere kann das Nutzer-Endgerät ein portables Gerät sein, das ein Benutzer mit sich führen kann. Vorzugsweise ist das Nutzer-Endgerät ein Mobilfunkgerät, ein Laptop oder ein Tablet PC. Solche Nutzer-Endgeräte kann ein Benutzer bequem mit sich führen und beispielsweise am Ort einer Rückgabeeinrichtung zum Auslösen einer Pfandgutschrift verwenden. Beispielsweise kann auf dem Nutzer-Endgerät eine Software, insbesondere eine App, installiert sein, mit der ein Betrieb des Nutzer-Endgeräts im Rahmen von Ausführungsbeispielen der Erfindung ermöglicht ist.

Gemäß einer weiteren beispielhaften Ausführungsform wird bei oder nach Übergabe der Berechtigung an dem Pfandgut auf einen Benutzer ein Pfandstatus des Identifizierers aktiviert. Die Aktivierung wird insbesondere durch die Steuereinrichtung vorgenommen. Die Aktivierung kann beispielsweise durch Setzen eines Flags in einer Datenbank oder durch eine andere elektronische Kennzeichnung des hergestellten oder noch herzustellenden Pfandguts in der Steuereinrichtung oder dem Nutzer-Endgerät erfolgen. Ein aktivierter Pfandstatus des Identifizierers ermöglicht, dass Pfandgut zusammen mit dem aktivierten Identifizierer zurückzugeben und entsprechend einen Pfandwert zu erhalten. Die Aktivierung kann bei Übergabe an den Benutzer oder zu einem späteren Zeitpunkt erfolgen.

Eine betrugssichere und zuverlässig kontrollierbare Rückgabe des Pfandguts kann dann durch Erkennen des aktiven Identifizierers des Pfandguts an einer Rückgabeeinrichtung erfolgen. Vor Übergabe des Pfandguts an den Benutzer und nach Rückgabe des Pfandguts kann der Pfandstatus deaktiviert werden und entsprechend in dem Identifizierer gespeichert werden. Der Pfandstatus kann auch vor Übergabe des Pfandguts an den Benutzer aktiviert werden. Somit kann ein Missbrauch von existierenden Identifizierern verhindert werden, da beispielsweise mit einem Identifizierer nicht mehrere Pfandgüter zurückgegeben werden können.

Beispielsweise kann der Pfandstatus bzw. der Identifizierer selbst (zum Beispiel ein, insbesondere eindeutiger QR-Code) zentral vom System (insbesondere von der Steuereinrichtung) generiert werden und zur Verfügung gestellt werden.

Gemäß einer weiteren beispielhaften Ausführungsform wird der Pfandstatus des Identifizierers in einem Nutzer-Endgerät gespeichert und/oder an die Steuereinrichtung übermittelt. Gemäß einer entsprechenden Ausführungsform der Anordnung ist das Nutzer-Endgerät mit der Steuereinrichtung drahtgebunden oder drahtlos gekoppelt, wobei der Pfandstatus des Identifizierers in dem Nutzer-Endgerät oder der Steuereinrichtung speicherbar ist. Gemäß einer weiteren beispielhaften Ausführungsform ist die Aktivierungs-Kommunikationsnachricht von der Übergabeeinrichtung oder dem Nutzer-Endgerät an die Steuereinrichtung übermittelbar.

Gemäß einer weiteren beispielhaften Ausführungsform wird nach Übergabe der Berechtigung an dem Pfandgut auf einen Benutzer der Pfandstatus des Identifizierers mit der passenden Pfandkategorie nach Ablauf einer Zeitdauer, insbesondere von zwei Wochen oder einem Monat, aktiviert. Damit kann beispielsweise der Ablauf von Rückgabe- und Garantiefristen abgewartet werden, bis zu welchem der Benutzer das Pfandgut bei der Bezugseinrichtung (d. h. im Händler) umtauschen kann. Insbesondere bei Online-Käufen kann die Rückzahlung zwischen dem Benutzer und dem Online-Kaufhaus als Bezugseinrichtung vereinfacht werden, da bis zur Rückgabe kein Pfandstatus aktiviert und deaktiviert werden muss und somit eine Kommunikation zu der Steuereinrichtung unnötig ist. Werden unnötige Kommunikationsnachrichten zum Aktivieren und Deaktivieren des Pfandstatus des Identifizierer vermieden, können Systemressourcen eingespart werden.

Gemäß einer entsprechenden beispielhaften Ausführungsform der Anordnung ist die Steuereinrichtung mit der Übergabeeinrichtung gekoppelt, wobei die Übergabeeinrichtung eine Aktivierungs-Kommunikationsnachricht an die Steuereinrichtung bei oder nach Übergabe der Berechtigung an dem Pfandgut auf einen Benutzer sendet, sodass die Steuereinrichtung den Pfandstatus des Identifizierers aktiviert. Die Steuereinrichtung ist insbesondere konfiguriert nach Übergabe der Berechtigung an dem Pfandgut auf einen Benutzer, den Pfandstatus nach Ablauf der Zeitdauer zu aktivieren.

Beispielsweise kann das Pfandgut zusammen mit dem Identifizierer an den Benutzer zeitgleich übergeben werden und der Pfandstatus später, nach Ablauf einer Zeitdauer aktiviert werden. Alternativ kann zwar die Berechtigung an dem Pfandgut mit dem bezogenen Identifizierer gleichzeitig erfolgen, der Identifizierer an sich jedoch erst nach Ablauf der Zeitdauer an den Benutzer geschickt werden. Beispielsweise kann nach Ablauf der Zeitdauer der Identifizierer als Etikett auf postalischen Weg dem Benutzer geschickt werden.

Alternativ kann nach Ablauf der Zeitdauer der Identifizierer als virtueller Identifizierer über elektronischen Postweg, beispielsweise über eine Kurznachricht, eine E-Mail oder über eine Applikation (App) in einem Nutzer-Endgerät zugesendet bzw. verfügbar gemacht werden.

Gemäß einer weiteren beispielhaften Ausführungsform erfolgt das Aktivieren des Pfandstatus des Identifizierers ausgelöst bei oder nach Übergabe der Berechtigung an dem Pfandgut durch ein Übermitteln einer Aktivierungs-Kommunikationsnachricht an die Steuereinrichtung. Beispielsweise kann die Bezugseinrichtung oder die Übergabeeinrichtung eine Aktivierungs-Kommunikationsnachricht nach Übergabe der Berechtigung an dem Pfandgut auf den Benutzer an die Steuereinrichtung gesendet werden, um den Pfandstatus auf "aktiv" zu setzen. Ferner kann das Aktivieren des Pfandstatus des Identifizierers durch den Benutzer bzw. durch das Nutzer-Endgerät erfolgen. Beispielsweise kann das Nutzer-Endgerät den Identifizierer scannen oder nach elektronischen (virtuellen) Erhalt des Identifizierers die Aktivierungs-Kommunikationsnachricht an die Steuereinrichtung senden.

Gemäß einer weiteren beispielhaften Ausführungsform wird das Beziehen des Identifizierers mit dem Pfandgut bei Bezug des Pfandguts durch einen Benutzer basierend auf einem Lieferort des Pfandguts durchgeführt. Der Lieferort des Pfandguts ist der Ort, an dem der Benutzer das Pfandgut geliefert bekommt bzw. der Lieferort, den der Benutzer bei Bezug der Bezugseinrichtung angibt. Beispielsweise bei Fernabsatzgeschäften bzw. Onlinekäufen liegen die Bezugseinrichtung und der Lieferort räumlich auseinander. Beispielsweise kann der Lieferort des Pfandguts in einem Gebiet liegen, indem für ein bestimmtes Pfandgut gesetzliche Pfandbestimmungen gelten oder indem beispielsweise keine gesetzlichen Pfandbestimmungen gelten. Somit kann nach Bestimmung des Lieferorts die Bezugseinrichtung entscheiden, ob das Pfandgut mit einem Identifizierer aufgrund gesetzlicher Vorgaben und Richtlinien bezogen werden muss und entsprechend, ob ein Identifizierer gegen Entrichtung eines Pfandwerts von der Steuereinrichtung bezogen werden muss.

Die Bestimmung des Lieferorts kann beispielsweise durch den Benutzer durchgeführt werden, indem er bei seiner Bestellung, bzw. bei dem Bezug (beispielsweise eine Onlinebestellung über ein Onlinekaufhaus aufweisend die Bezugseinrichtung) angibt, ob er für das Pfandgut einen zugehörigen Identifizierer benötigt. Alternativ kann in der Bezugseinrichtung selbst der Lieferort überprüft werden und mit den in diesem Gebiet vorherrschenden Pfandbestimmungen abgeglichen werden. Die Informationen über vorherrschende Pfandbestimmungen in einem Gebiet können beispielsweise in der Steuereinrichtung gespeichert sein und abgerufen werden. Beispielsweise kann auch über die Domain des Online-Kaufhauses (.de, .at, etc...) bestimmt werden, ob eine Pfandbestimmungen existiert und ein Bezug eines Pfandguts zusammen mit einem Identifizierer notwendig ist. Bei Bezug des Pfandguts durch den Benutzer kann beispielsweise ein Hinweis gegeben werden (beispielsweise auf dem Nutzer- Endgerät), ob eine Pfandabgabe bzw. ein Bezug eines Identifizierers erforderlich ist und ob entsprechend der Pfandwert auf den Kaufpreis aufgeschlagen werden muss. In dem elektronischen Einkaufswagen wird dann selbsttätig der Identifizierer hinzugefügt. Anschließend wird die Berechtigung an dem Pfandgut zusammen mit dem Identifizierer an den Benutzer übergeben.

Gemäß einer beispielhaften Ausführungsform wird der Übergang der Berechtigung an dem Pfandgut auf den Benutzer durch Ausgabe des Pfandguts an den Benutzer in einem Ladengeschäft oder durch ein Transportunternehmen vorgenommen. Insbesondere bei einem Onlinekauf wird der Bezug des Pfandguts an der entfernten Bezugseinrichtung (online Kaufhaus) durchgeführt, wobei ein Transportunternehmen das Pfandgut physisch von der Bezugseinrichtung an einen entfernten Ort auf den Benutzer übergibt. Das erfindungsgemäße Verfahren und die Anordnung zum Verwalten von Identifizierern ist somit auf Bezug eines Pfandguts in einem Ladengeschäft wie auch in einem Online Kaufhaus umsetzbar.

Gemäß einer weiteren beispielhaften Ausführungsform wird nach der Übergabe der Berechtigung an dem Pfandgut mit dem bezogenen Identifizierer an den Benutzer das Pfandgut zusammen mit dem Identifizierer an eine Rückgabeeinrichtung (beispielsweise eingerichtet bei einem Händler (Ladengeschäft oder Online Kaufhaus) oder eingerichtet bei einem Recyclinghof) übergeben. Ferner wird eine Pfandgutschrift von einer Ausgabeeinrichtung ausgelöst, wenn der an der Rückgabeeinrichtung erkannte Identifizierer einen aktiven Pfandstatus des Identifizierers und das Pfandgut, das der im Identifizierer gespeicherten passenden Pfandkategorie entspricht, anzeigt.

Gemäß einer weiteren beispielhaften Ausführungsform der Anordnung weist diese eine entsprechende Rückgabeeinrichtung (z.B. der Händler (Retoure) oder Recyclinghof) auf, welche zur Übergabe des Pfandguts zusammen mit dem bezogenen Identifizierer konfiguriert ist, und die Ausgabeeinrichtung, welche zum Auslösen einer Pfandgutschrift konfiguriert ist, wenn der an der Rückgabeeinrichtung erkannte Identifizierer einen aktiven Pfandstatus des Identifizierers und das Pfandgut, das der im Identifizierer gespeicherten passenden Pfandkategorie entspricht, anzeigt.

Im Rahmen der vorliegenden Erfindung kann unter dem Begriff "Rückgabeeinrichtung" insbesondere eine Entität verstanden werden, an der oder mit der eine Rückgabe des Pfandguts nach dessen Nutzung ermöglicht ist. Die Rückgabe des Pfandguts kann zum Beispiel zur Entsorgung/Rückgabe des Pfandguts erfolgen. Beispielsweise kann die Rückgabeeinrichtung ein Müllsack, ein Rückgabecontainer oder eine Rückgabestation (die beispielsweise am Ort der Ausgabeeinrichtung angeordnet sein kann, zum Beispiel in einem Ladengeschäft) sein. Zum Beispiel kann die Rückgabeeinrichtung auch ein Abfallsammelzentrum sein. Ferner kann unter der Rückgabeeinrichtung ebenfalls eine Einrichtung in einem Ladengeschäft oder in einem Online Kaufhaus verstanden werden, welches das Pfandgut zurücknimmt. Beispielsweise kann die Bezugseinrichtung, bei der der Bezug des Pfandguts initiiert wurde, als Rückgabeeinrichtung fungieren. Insbesondere bei Rückgaben innerhalb eines Garantiezeitraums durch den Benutzer kann die Bezugseinrichtung als Rückgabeeinrichtung fungieren.

Gemäß einer weiteren beispielhaften Ausführungsform der Anordnung ist die Ausgabeeinrichtung derart mit der Steuereinrichtung gekoppelt, dass nach Auslösen einer Pfandgutschrift der deaktivierte Pfandzustand mittels einer Pfandgutschrift-Kommunikationsnachricht an die Steuereinrichtung übermittelt wird und der deaktivierte Pfandzustand in dem Identifizierer gespeichert wird.

Sobald die Steuereinrichtung feststellt, dass der Pfandstatus in dem Identifizierer aktiv ist, initiiert die Ausgabeeinrichtung eine Auszahlung des Pfandwerts an den Benutzer. Die Ausgabeeinrichtung kann beispielsweise ein Kassensystem darstellen, welche zur Auszahlung des Pfandwerts in Form von Geldmünzen oder -scheinen eingerichtet ist. Die Ausgabeeinrichtung kann ebenfalls durch ein virtuelles Zahlungssystem, wie beispielsweise PayPal, ausgebildet werden, sodass auf Freigabe durch die Steuereinrichtung der Pfandwert auf ein Buchungskonto des Benutzers überwiesen werden kann.

Gemäß einer weiteren beispielhaften Ausführungsform wird mittels einer Überprüfungseinrichtung geprüft, ob das übergebene Pfandgut an die Rückgabeeinrichtung der im Identifizierer gespeicherten Pfandkategorie des Pfandguts entspricht. An der Rückgabeeinrichtung bzw. an der Überprüfungseinrichtung kann beispielsweise der Identifizierer mit einer entsprechenden Applikation bzw. einer Software (beispielsweise einer (Business-)App) eingescannt werden und die Daten weiter an die Steuereinrichtung weitergeleitet werden. Anhand von Produktinformationen oder Beispielfotos des Pfandguts kann beispielsweise verifiziert werden, ob die korrekte Pfandkategorie, welche im Identifizierer abgespeichert ist, zurückgegeben wurde. Beispielsweise kann ein Mitarbeiter an der Rückgabeeinrichtung bzw. der Überprüfungseinrichtung auf seinem Nutzer-Endgerät die (Business-)App speichern und ausführen.

Die Überprüfungseinrichtung kann beispielsweise einen Scanner aufweisen, welcher beispielsweise ein Produktdatenblatt bzw. Produktlabel des Pfandguts einscannt. Beispielsweise kann eine Produktnummer, ein EAN (European Article Nummber) code oder direkt aufgedruckte Produktkategorien (Li-Ionen Akku für Lithium-Ionen Batterien) eingescannt und über Texterkennung digitalisiert werden. Ferner kann durch Aufnahme eines Fotos durch die Überprüfungseinrichtung mittels Bilderkennung oder durch einen Mitarbeiter an der Überprüfungseinrichtung verifiziert werden, ob das zurückgegebene Pfandgut der auf dem Identifizierer gespeicherten Pfandkategorie bzw. Produktkategorie entspricht. Ist das Pfandgut beispielsweise eine Lithiumbatterie kann sichergestellt werden, dass keine minderwertige aber ähnlich aussehende Batterie, z.B. Nickel-Cadmium Batterie, zurückgegeben wird. Nach dem Auslesen des Identifizierer kann anhand von z.B. Beispielfotos die Produktkategorie geprüft werden. Bei Bestätigung der Überprüfungseinrichtung, dass es sich bei dem zurückgegebenen Pfandgut um eine Pfandkategorie auf dem Identifizierer handelt, kommuniziert die Überprüfungseinrichtung mit der Steuereinrichtung zur Freigabe einer Auszahlung des Pfandwert. Somit kann Missbrauch bei der Rückgabe des Pfandguts verhindert werden.

Gemäß einer weiteren beispielhaften Ausführungsform wird nach Auslösen einer Pfandgutschrift durch die Ausgabeeinrichtung der Pfandstatus des Identifizierers deaktiviert und der deaktivierte Pfandzustand in dem Identifizierer gespeichert. Der deaktivierte Pfandzustand wird mittels einer Pfandgutschrift-Kommunikationsnachricht an die Steuereinrichtung übermittelt. Somit wird in der zentralen Steuereinrichtung eine Rückgabe und eine Auszahlung verwaltet. Es wird damit sichergestellt, dass mit einem Identifizierer, der an ein Pfandgut gekoppelt ist, nur einmalig ein Pfandwert ausgezahlt wird. Die Auszahlung kann direkt von der Steuereinrichtung an den Benutzer erfolgen oder vom Händler an den Benutzer, wobei der Händler den Betrag wieder von der Steuerreinrichtung bekommt.

Gemäß einer weiteren beispielhaften Ausführungsform ist das Pfandgut in einem Produkt eingebaut. Insbesondere kann das Pfandgut fest, d. h. nicht austauschbar, in dem Produkt eingebaut sein und gegebenenfalls nicht von außen durch den Benutzer erkennbar sowie entnehmbar sein. Beispielsweise werden in modernen elektronischen Geräten nicht austauschbare Batterien verbaut, die jedoch in manchen Regionen einer Pfandverpflichtung unterliegen. In diesem Fall kann beispielsweise der Identifizierer getrennt von dem Pfandgut dem Benutzer bereitgestellt werden, sodass dieser bei Rückgabe des Produkts den Pfandwert des eingebauten Pfandguts zurückerhalten kann. Somit kann selbst bei komplexen Produkten einem fest eingebauten Pfandgut ein einfach umsetzbares und robustes Verwaltungssystem für Pfandgüter bereitgestellt werden.

Gemäß einer weiteren beispielhaften Ausführungsform wird der Identifizierer mit dem Produkt bezogen, wobei der Identifizierer insbesondere eine Produktkategorie eines entsprechenden Produkts speichert. Somit kann sichergestellt werden, dass der Benutzer das Pfandgut zusammen mit dem Produkt zurückgibt, für welches Produkt er ursprünglich das Pfandgut bezogen hat. Somit können beispielsweise Rückgabeerfordernisse für bestimmte Produktgruppen, die ein bestimmtes Pfandgut eingebaut haben, aufgestellt werden. Ein Trennen des Pfandguts von dem Produkt und ein entsprechend getrenntes Zurückgeben des Pfandguts separat vom Produkt kann somit verhindert werden.

Gemäß einer weiteren beispielhaften Ausführungsform sind eine Vielzahl von Pfandgütern in dem Produkt einbaut, wobei zu jedem der Pfandgüter ein zugehöriger Identifizierer indikativ für die entsprechende Pfandkategorie bezogen wird. Somit kann ein Produkt mit einer Vielzahl von Pfandgütern ausgestattet sein, wobei zu jedem Pfandgut eine individuelle Pfandkategorie bzw. ein individueller Pfandwert zugeordnet werden kann. Der Benutzer kann somit bei Bezug des Produkts mehrere Identifizierer erhalten. Beispielsweise kann der Benutzer auch einen sogenannten Master Identifizierer erhalten, in dem die Vielzahl von Pfandgüter (z.B. Anzahl an Pfandgütern einer Pfandkategorie) gespeichert sind. Bei Rückgabe der Identifizierer an der Rückgabeeinrichtung kann der Benutzer die Pfandgüter mit dem bezogenen Identifizierer bzw. Identifizierern einzeln oder gesammelt zurückgeben.

Entsprechend kann gemäß einer beispielhaften Ausführungsform das Produkt zusammen mit dem Pfandgut und dem bezogenen Identifizierer an eine Rückgabeeinrichtung übergeben werden. Beispielsweise sind in elektronischen Produkten nicht auswechselbare und fest verbaute Akkus (als Pfandgut) integriert, sodass dann das elektronische Produkt mit dem Akku als Pfandgut zurückgegeben kann. Es wird eine Pfandgutschrift an eine Ausgabeeinrichtung ausgelöst, wenn der an der Rückgabeeinrichtung erkannte Identifizierer einen aktiven Pfandstatus des Identifizierers und die zum zurückgegebenen Pfandgut passende Pfandkategorie anzeigt.

Gemäß einer weiteren beispielhaften Ausführungsform wird bei Übergabe des Produkts mittels einer Überprüfungseinrichtung geprüft, ob das übergebene Produkt der im Identifizierer gespeicherten Produktkategorie des Produkts entspricht.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben.
Fig. 1 zeigt eine schematische Darstellung einer Anordnung zum Verwalten von Identifizierern, welche indikativ für Pfandgüter sind, gemäß einer beispielhaften Ausführungsform.
Fig. 2 zeigt eine beispielhafte Darstellung eines Nutzer-Endgeräts mit einem Identifizierer gemäß einer beispielhaften Ausführungsform.
Fig. 3 zeigt eine beispielhafte Darstellung eines Verfahrens zum Rückführen des Pfandguts mit passendem Identifizierer gemäß einer beispielhaften Ausführungsform der vorliegenden Erfindung
Fig. 4 zeigt eine beispielhafte Darstellung eines Verfahrens und einer Anordnung zum Verwalten von Identifizieren, welches in einem Produkt integriert ist, gemäß einer beispielhaften Ausführungsform

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

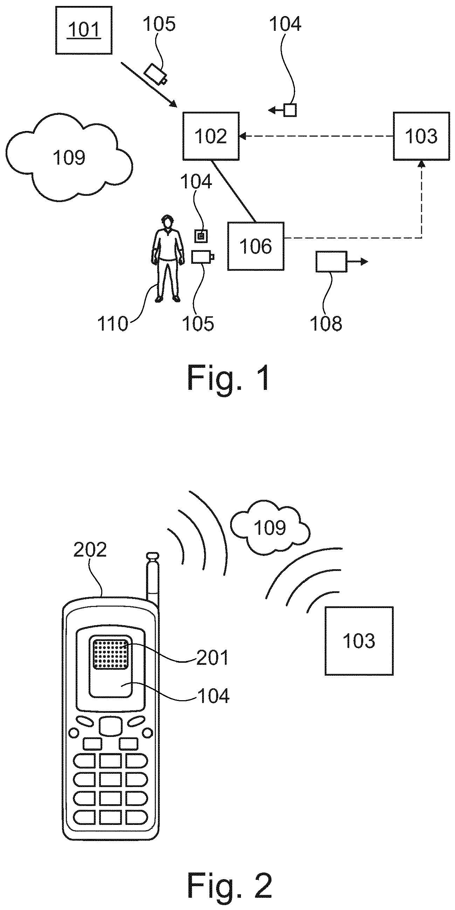

**Fig. 1** zeigt eine schematische Darstellung einer Anordnung und ein Verfahren zum Verwalten von Identifizierern 104, welche indikativ für Pfandgüter 105 sind gemäß einer beispielhaften Ausführungsform. Obwohl nur ein Pfandgut 105 dargestellt ist, kann eine beliebig große Vielzahl von Identifizierern 104, welche indikativ für das Pfandgut 105 sind, verwaltet werden.

Ein Pfandgut 105 wird bereitgestellt und ein Identifizierer 104 von einer Steuereinrichtung 103 gegen Entrichtung eines Pfandwerts der indikativ für eine Pfandkategorie des Pfandguts 105 ist, bezogen, so dass der Identifizierer 104 die Pfandkategorie des Pfandguts 105 speichert. Der Identifizierer 104 wird mit dem Pfandgut 105 bei Bezug des Pfandguts 105 durch einen Benutzer 110 bezogen. Eine Berechtigung an dem Pfandgut 105 wird mit dem bezogenen Identifizierer 104 an den Benutzer übergeben.

Das erfindungsgemäße Verfahren ist mit einer Anordnung implementierbar, die beispielsweise eine Bereitstellungseinrichtung 101 zum Bereitstellen des Pfandguts 105 aufweist. Ferner weist die Anordnung die Steuereinrichtung 103 auf, welche zumindest einen Identifizierer 104 bereitstellt und verwaltet, wobei die Steuereinrichtung 103 konfiguriert ist gegen Entrichtung eines Pfandwerts den Identifizierer 104 bereitzustellen. Der Identifizierer 104 ist indikativ für eine Pfandkategorie des Pfandguts 105, so dass der Identifizierer 104 die Pfandkategorie des Pfandguts 105 speichert. In Fig. 1 ist das Pfandgut 105 beispielsweise als Batterie symbolisch dargestellt.

Die Anordnung weist ferner eine Bezugseinrichtung 102 (z.B. ein Händler, von dem der Benutzer 110 das Pfandgut bezieht). Die Bezugseinrichtung 102 ist mit der Bereitstellungseinrichtung 101 und der Steuereinrichtung 103 gekoppelt zum Bezug des Pfandguts 105 und des Identifizierers 104. Die Bezugseinrichtung 102 ist konfiguriert zum Bereitstellen (virtuell oder physisch als Klebeetikett) des Identifizierers mit dem Pfandgut 105 bei Bezug. Bei Bezug bedeutet beispielsweise, bei Kauf, Abschluss eines Kaufvertrags und/oder Bestellung des Benutzers 110 etc. des Pfandguts 105 durch einen Benutzer 110. Die Anordnung weist ferner eine Übergabeeinrichtung 106 (beispielsweise eine Einrichtung in einem Ladengeschäft, einem Online Kaufhaus oder einem Transportunternehmen) auf, zur Übergabe einer Berechtigung an dem Pfandgut 105 mit dem bezogenen Identifizierer 104 an den Benutzer 110.

In dem aufgeführten Beispiel kann das Pfandgut 105 als Batterie, insbesondere Lithium-Ionen-Batterie ausgebildet sein. Um einen Benutzer zu motivieren, die Entsorgung durchzuführen, kann die Ausgabe des Pfandguts 105 an die Entrichtung einer Pfandgebühr bzw. eines Pfandwerts gekoppelt werden, die bei Rückgabe oder Entsorgung des Pfandguts 105 an den Benutzer 110 zurückgeführt werden kann. Dem Identifizierer 104 ist eine Pfandkategorie des Pfandguts 105 zugeordnet. Die Pfandkategorie beschreibt eine bestimmte Ausführungsart bzw. intrinsische Eigenschaft oder eine bestimmte Spezifikation des Pfandguts 105. Im Falle des aufgeführten Beispiels mit einer Batterie als Pfandgut 105 kann als Pfandkategorie beispielsweise kategorisieren werden, ob es sich bei der Batterie um eine Lithium-Ionen Batterie, um eine bleihaltige Batterie, allgemein um eine aufladbare Batterie oder eine nicht aufladbare Batterie handelt. Ferner kann die Pfandkategorie beispielsweise die Kapazität bzw. Energiedichte eines Pfandguts 105 (beispielsweise eine Batterie) definieren. Der Identifizierer 104, welcher die Pfandkategorie des bezogenen Pfandguts 105 speichert, gibt basierend auf der Pfandkategorie einen bestimmten Pfandwert vor. Der Identifizierer 104 wird zusammen mit dem Pfandgut 105 bezogen und ist indikativ für den Pfandwert des Pfandguts 105. So ist es beispielsweise möglich, eine Batterie mit einer hohen Kapazität bzw. Energiedichte, die einer entsprechenden Pfandkategorie zugeordnet ist, mit einem höheren Pfandwert zu belegen als eine Batterie mit einer geringeren Kapazität bzw. Energiedichte.

Die Steuereinrichtung 103 verwaltet und stellt einen oder mehrere Identifizierer 104 mit einer oder mehreren unterschiedlichen bestimmten Produktkategorien bereit. Dabei greift die Steuereinrichtung 103, beispielsweise zum Ausgeben und Zurücknehmen des Identifizierers 104, auf die Speicherressourcen zu. Beispielsweise kann die Steuereinrichtung 103 ein Computer, insbesondere ein Server-Computer, sein. Die Steuereinrichtung 103 ist ferner über das Kommunikationsnetzwerk 109 mit der Bezugseinrichtung 102 und der Übergabeeinrichtung 106 und/oder mit einem Nutzer-Endgerät 202 (siehe Fig. 2) gekoppelt und kann als Master fungieren, wohingegen die anderen verbundenen Einrichtungen als Slave(s) fungieren können. Die Steuereinrichtung 103 kann auch ausgebildet sein, mit einer Vielzahl von Einrichtungen und/oder Nutzer-Endgeräten 202 zu kommunizieren und/oder diese zu steuern.

An dem Herstellort bzw. Bereitstellungsort (d. h. bei dem Herstellort des Pfandguts 105 oder einem Zwischenhändler) ist die Bereitstellungseinrichtung 101 vorgesehen, von wo aus das Pfandgut 105 an den Ort der Bezugseinrichtung 102 geliefert wird.

Die Bezugseinrichtung 102 ist an dem Ort vorgesehen, an welchem das Pfandgut 105 bereitgestellt wird. Die Bezugseinrichtung 102 stellt das Pfandgut 105 mit dem Identifizierer 104 bereit. Die Bezugseinrichtung 102 stellt insbesondere die Entität dar, von welchem der Benutzer 110 das Pfandgut 105 bezieht. Ein Bezug des Benutzers 110 bedeutet vorliegend, dass ein Kauf, d. h. ein Abschluss eines Kaufvertrags, oder eine Bestellung durch den Benutzer 110 an der Bezugseinrichtung 102 vorgenommen wird. Die Bezugseinrichtung ist somit einerseits mit der Bereitstellungseinrichtung 101 und der Steuereinrichtung 103 über das Kommunikationsnetzwerk 109 zum Informationsaustausch bzw. Datenaustausch verbunden und gibt das Pfandgut 105 zusammen mit dem Identifizierer 104 bzw. die Berechtigung an dem Pfandgut 105 nach Bezug an den Benutzer 110 aus.

Die Steuereinrichtung 103 dient als zentrale Ausgabe- und Verwaltungsstelle der Identifizierer 104, sodass von der Steuereinrichtung 103 Identifizierer 104 einer bestimmten Pfandkategorie seitens der Bezugseinrichtung 102, d. h. beispielsweise von dem Händler bzw. Verkäufer, gegen die Zahlung eines Pfandwerts bezogen werden können. Die Steuereinrichtung 110 verwaltet Identifizierer 104 dahingehend, dass ausgegebene Identifizierer 104 bestimmt sind und deren Pfandstatus gespeichert wird, d. h. ob ein Identifizierer 104 aktiviert oder deaktiviert ist. Bei einem aktivierten Identifizierer ist ein Pfandwert gezahlt worden und das Pfandgut 105 noch nicht zurückgegeben worden. Bei einem deaktivierten Identifizierer 104 ist das zugehörige Pfandgut 105 beispielsweise bereits zurückgegeben worden und der Pfandwert ausgezahlt worden. Die Steuereinrichtung 110 verwaltet somit eine Vielzahl von Identifizierern 104 und insbesondere eine Vielzahl von Identifizierern 104 unterschiedlicher Pfandkategorien. Durch die Verwaltung der zugehörigen aktivierten und deaktivierten Status steuert die Steuereinrichtung 103 ebenfalls, ob die Auszahlung bzw. Rückzahlung des Pfandwerts bei Rückgabe des Pfandguts 105 möglich ist.

Die Bezugseinrichtung 102 bei einem Händler bezieht von der Steuereinrichtung 103 bei Bezug des Pfandguts 105 durch den Benutzer 110, einen, für das Pfandgut 105 passenden Identifizierer 104. Die Bezugseinrichtung 102 bezieht den für das Pfandgut 105 zugeordneten Identifizierer 104 und übergibt über die Übergabeeinrichtung 106 (beispielsweise das Ladengeschäft oder das Transportunternehmen bei einem Online-Kauf) das Pfandgut 105 bzw. dessen Berechtigung zusammen mit dem bezogenen Identifizierer 104 (welcher indikativ für die passende Pfandkategorie ist) an den Benutzer 110. Der Identifizierer 104 kann an dem Pfandgut 105 befestigt werden oder lose bzw. getrennt voneinander an den Benutzer 110 übergeben werden. Pro Pfandgut 105 ist insbesondere ein Identifizierer 104 zu beziehen und entsprechend eine Pfandabfuhr möglich.

Nach Übergabe der Berechtigung an einem Pfandgut 105 erhält der Benutzer 110 somit ebenfalls die Berechtigung an dem bezogenen Identifizierer 104, welcher indikativ für die Pfandkategorie ist.

Der Hersteller bzw. Produzent als Bereitstellungseinrichtung 101 kann das Pfandgut 105, auf welchem beispielsweise die Produktdaten aufgedruckt sind oder mit dem Pfandgut 105 mitgeliefert werden, an die Bezugseinrichtung 102, wie beispielsweise den Händler bzw. Verkäufer, bereitstellen. Somit sind von dem Pfandgut 105 der Hersteller, die Produktkategorie, die Inhaltsstoffe oder beispielsweise die Gefahrenklassifikation bekannt. Die Bezugseinrichtung 102 bezieht das Pfandgut 105 oder das Produkt 401, in dem das Pfandgut 105 enthalten ist, vom Hersteller und bezieht zudem gegen Entrichtung eines Pfandwerts von der Steuereinrichtung 101 einen Identifizierer 104 mit der zum Pfandgut 105 passenden Pfandkategorie. Die Bezugseinrichtung 102 kann dabei für ein Pfandgut 105 oder für eine Vielzahl von Pfandgütern 105 gleichzeitig mehrere Identifizierer 104 von der Steuereinrichtung 103 beziehen.

Alternativ kann ebenfalls der Hersteller des Pfandguts 105, oder der Hersteller des Produkts 401, das das Pfandgut 105 enthält, die Bereitstellungseinrichtung 101 und Bezugseinrichtung 102 aufweisen. Der Hersteller kann durch Herstellen des Pfandguts 105, oder der Hersteller des Produkts, das das Pfandgut 105 enthält, das Pfandgut 105 bereitstellen und die zugehörigen Identifizierer 104 gegen Entrichtung eines Pfandwerts von der zentralen Steuereinrichtung 103 beziehen. Die Bezugseinrichtung 102 beim Hersteller stellt das Pfandgut 105 mit dem zugehörigen Identifizierer 104 bereit und übergibt die Berechtigung an dem Pfandgut 105 mit dem Identifizierer 104 an einen Händler als Zwischeneinrichtung von der wiederum dem Benutzer 110 gegen Zahlung eines Pfandwerts bezieht.

Die Bezugsvorrichtung 102 kann ferner von der Steuereinrichtung 103 eine Vielzahl von Identifizierern 104 gegen Entrichtung eines Pfandwerts, der indikativ für eine Pfandkategorie des Pfandguts 105 ist, beziehen. Bei Bezug des Pfandguts 105 durch den Benutzer 110 wird einer der Vielzahl von Identifizierer 104 mit dem Pfandgut 105 bezogen. Der Hersteller oder Händler aufweisend die Bezugseinrichtung 102 kann somit auch vor Bezug eines Pfandguts 105 durch den Benutzer 110 eine Vielzahl von Identifizierern 104 von der Steuereinrichtung 103 beziehen und dann erst einzeln bei Bezug durch den Benutzer einen dieser (vorzugsweisen eindeutigen) Identifizierer 104 mit dem Pfandgut 105 bereitstellen.

Wie in Fig. 1 dargestellt, kann der Identifizierer 104 getrennt von dem Pfandgut 105 an den Benutzer 110 übergeben werden. Beispielsweise kann der Identifizierer 104 ein Klebeetikett darstellen, dass vom Benutzer 110 auf das Pfandgut 105 geklebt werden kann.

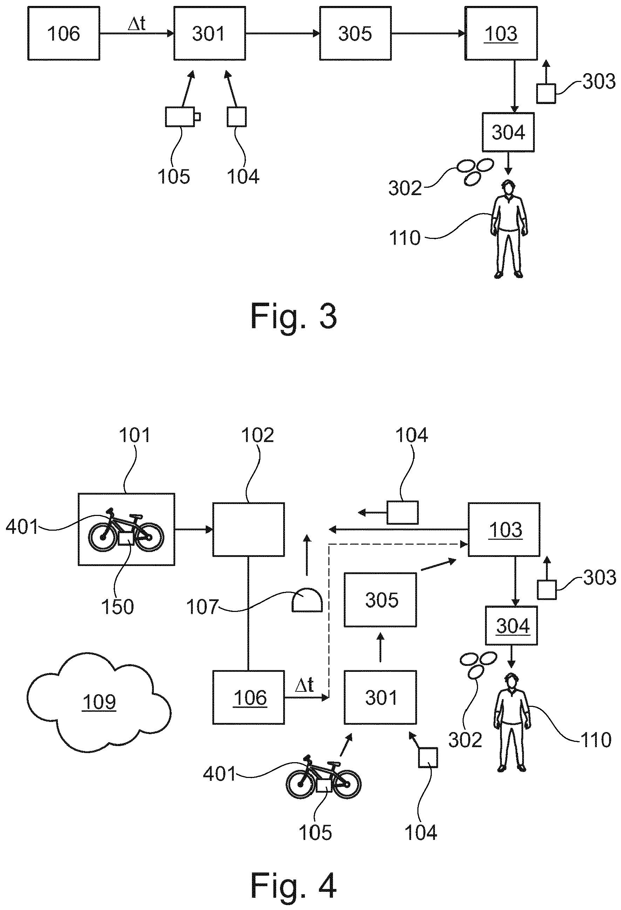

Der Identifizierer 104 weist beispielsweise einen auslesbaren Identifizierungscode, beispielsweise einen QR-Code auf, der von der zentralen Steuereinrichtung 103 generiert wird und von den Einrichtungen des Verfahrens bzw. der Anordnung (zum Beispiel der Bezugseinrichtung 102, der Übergabeeinrichtung 106 und/oder der Rückgabeeinrichtung 301 (siehe Fig. 3)) zum Verwalten von Identifizierer 104, welche indikativ für das Pfandgut 105 sind, ausgelesen werden kann. Ferner kann der Identifizierer 104 beispielsweise von einem Nutzer-Endgerät 202 (z.B. mittels einer App) von dem Benutzer 110 oder von einem Nutzer-Endgerät eines Mitarbeiters (z.B. mittels einer (Business-)App) ausgelesen werden. Der Identifizierer 104 kann einen QR-Code, einen Barcode, einen Transponder, insbesondere einem RFID-Tag, oder einen alphanumerischen Code aufweisen.

Vor, bei oder nach Übergabe der Berechtigung an dem Pfandgut 105 auf den Benutzer 110 wird ein Pfandstatus des Identifizierers 104 aktiviert. Die Aktivierung wird insbesondere durch die Steuereinrichtung 103 vorgenommen und verwaltet. Die Aktivierung kann beispielsweise durch Setzen eines Flags in einer Datenbank der Steuereinrichtung 103 oder durch eine andere elektronische Kennzeichnung des Identifizierers 104 in der Steuereinrichtung 103 erfolgen. Ein aktivierter Pfandstatus des Identifizierers 103 ermöglicht, dass Pfandgut 105 zusammen mit dem aktivierten Identifizierer 104 zurückzugeben und entsprechend einen Pfandwert zu erhalten. Die Aktivierung kann vor oder bei Übergabe an den Benutzer 110 oder zu einem späteren Zeitpunkt erfolgen. Beispielsweise vor Übergabe des Pfandguts 105 an den Benutzer 110 und nach Rückgabe des Pfandguts 105 kann der Pfandstatus deaktiviert werden und entsprechend in dem Identifizierer 104 gespeichert werden. Somit kann ein Missbrauch von existierenden Identifizierern 104 verhindert werden, da beispielsweise mit einem Identifizierer 104 nicht mehrere Pfandgüter 105 zurückgegeben werden können. Beispielsweise kann der Pfandstatus bzw. der Identifizierer 104 selbst (zum Beispiel ein QR-Code-Etikett) zentral vom System (insbesondere von der Steuereinrichtung 103) generiert werden und zur Verfügung gestellt werden.

Die Steuereinrichtung 103 ist über das Kommunikationsnetzwerk 109 mit der Übergabeeinrichtung 106 zum Informationsaustausch bzw. Datenaustausch verbunden, wobei eine Aktivierungs-Kommunikationsnachricht 107 von der Übergabeeinrichtung 106 oder dem Nutzer-Endgerät 202 bei oder nach Übergabe der Berechtigung an dem Pfandgut 105 auf einen Benutzer 110 an die Steuereinrichtung 103 übermittelt werden kann. Mittels der Aktivierungs-Kommunikationsnachricht 107 kann der Pfandstatus des Identifizierers 104 in der Steuereinrichtung 103 optional auf "aktiv" gesetzt. Alternativ kann die Übergabeeinrichtung 106 konfiguriert sein, umgehend nach Übergabe oder nach Ablauf der Zeitdauer die Aktivierungs- Kommunikationsnachricht 108 an die Steuereinrichtung 103 zu senden. Ferner kann das Aktivieren des Pfandstatus des Identifizierers 104 durch den Benutzer 110 bzw. durch das Nutzer-Endgerät 202 erfolgen. Beispielsweise kann das Nutzer-Endgerät 202 den Identifizierer 104 scannen oder nach elektronischem (virtuellen) Erhalt des Identifizierers 104 die Aktivierungs-Kommunikationsnachricht 108 an die Steuereinrichtung 103 senden. Zudem kann beispielsweise der Identifizier 104 bereits bei Übergabe von der Steuereinrichtung 103 auf die Bezugseinrichtung 102, also vor Bezug durch den Benutzer 110, einen aktiven Pfandstatus aufweisen.

Die Bezugseinrichtung 102 ist ferner konfiguriert, das Beziehen des Identifizierers 104 mit dem Pfandgut 105 bei Bezug des Pfandguts durch einen Benutzer 110 basierend auf einem Lieferort des Pfandguts durchzuführen oder andere Ortsinformationen, woraus hervorgeht, wo das Pfandgut 105 verwendet wird. Der Lieferort des Pfandguts 105 ist der Ort, an dem der Benutzer 110 das Pfandgut geliefert bekommt bzw. der Lieferort, den der Benutzer 110 bei Bezug der Bezugseinrichtung 102 angibt. Somit kann nach Bestimmung des Lieferorts die Bezugseinrichtung 102 entscheiden, ob das Pfandgut 105 mit einem Identifizierer 104 bezogen werden muss und entsprechend ein Identifizierer 104 gegen Entrichtung eines Pfandwerts von der Steuereinrichtung 103 bezogen werden muss.

**Fig. 2** zeigt ein Nutzer-Endgerät 202, welches über das Kommunikationsnetzwerk 109 mit der Steuereinrichtung 103 verknüpft ist. Der Identifizierer 104 kann eine virtuelle Struktur (zum Beispiel ein Datensatz bzw. Tag) aufweisen, die zwischen den Einrichtungen, dem Nutzer-Endgerät 202 und insbesondere der Steuereinrichtung 103 logisch bzw. datentechnisch zugeordnet und ausgetauscht werden kann. Zum Beispiel kann ein solcher Identifizierer 104 ein Datensatz (zum Beispiel gespeichert in der Steuereinrichtung 103 und/oder in dem Nutzer-Endgerät 202) sein. Der Identifizierer 104 kann ebenso optisch auf einem Display des Nutzer-Endgeräts 202 visualisiert werden. Entsprechend kann der Benutzer 110 selbst die Informationen des Identifizierers 104 auslesen. Der Identifizierer 104 kann ebenfalls als Barcode 201 dargestellt werden und somit beispielsweise mittels einer Scaneinrichtung, beispielsweise an der Übergabeeinrichtung einer 106 oder der später erläuterten Rückgabeeinrichtung 301 (siehe Fig. 3), ausgelesen werden.

Das Nutzer-Endgerät 202, wie beispielsweise ein Mobiltelefon, kann ebenfalls einen realen, nicht virtuellen Identifizierer 104 scannen bzw. fotografieren und somit verwahren und/oder später im Nutzer-Endgerät 202 graphisch anzeigen. Beispielsweise kann das Nutzer-Endgerät 202 über das Kommunikationsnetzwerk 109 mit der Steuereinrichtung 103 verbunden sein, um die Berechtigung des Benutzers 110 an dem Identifizierer 104 zu verwalten. Beispielsweise kann in dem Nutzer-Endgerät 202 eine bestimmte App (Applikation), gespeichert sein, die softwaretechnisch eine Kommunikation und ein Verwalten mit der Steuereinrichtung 103 steuert.

Beispielsweise kann der Pfandstatus des Identifizierers 104 in dem Nutzer-Endgerät 202 gespeichert und/oder an die Steuereinrichtung 103 übermittelt werden. Die Aktivierungs-Kommunikationsnachricht 108 kann somit von der Übergabeeinrichtung 106 oder dem Nutzer-Endgerät 202 an die Steuereinrichtung 103 übermittelt werden.

**Fig. 3** zeigt eine beispielhafte Ausführungsform, in welcher eine Abfolge nach Übergabe des Pfandguts 105 auf den Benutzer 110 bis zu einer Ausgabeeinrichtung 304 zur Ausgabe des Pfandwerts dargestellt ist.

Nach der Übergabe der Berechtigung an dem Pfandgut 105 mit dem Identifizierer 104 an den Benutzer 110 kann das Pfandgut 105 zusammen mit dem zugehörigen Identifizierer 104 an eine Rückgabeeinrichtung 301 (beispielsweise als Retoure bei einem Händler (Ladengeschäft oder online Kaufhaus) oder einem Recyclinghof) übergeben werden. Ist der Pfandstatus des Identifizierers 104 "aktiv" und der Identifizierer 104 indikativ zu der Pfandkategorie des zurückgegebenen Pfandguts 105, kann entsprechend der Identifizierer 104 von einer Ausgabeeinrichtung 304 ausgelesen werden und der Pfandwert bzw. eine Pfandgutschrift 302 an den Benutzer 110 ausgezahlt werden. Gibt die Pfandkategorie eine Produktkategorie vor, beispielsweise eine Lithium-Ionen Batterie, und das zurückgegebene Pfandgut 105 ist eine Nickel-Cadmium Batterie, so wird die Ausgabe des Pfandwerts verwehrt.

Die Rückgabe des Pfandguts 105 kann zum Beispiel zur Entsorgung des Pfandguts 105 erfolgen. Ferner kann unter der Rückgabeeinrichtung 301 ebenfalls eine Einrichtung in einem Ladengeschäft oder eine (Computer-) Einrichtung in einem Online Kaufhaus verstanden werden, welches das Pfandgut 105 zurücknimmt. Beispielsweise kann die Bezugseinrichtung 102, bei der der Bezug des Pfandguts 105 initiiert wurde, als Rückgabeeinrichtung 301 fungieren. Insbesondere bei Rückgaben innerhalb eines Garantiezeitraums durch den Benutzer 110 kann die Bezugseinrichtung 102 als Rückgabeeinrichtung 301 fungieren.

Die Ausgabeeinrichtung 304 ist derart mit der Steuereinrichtung 103 gekoppelt, dass nach Auslösen einer Pfandgutschrift 302 der deaktivierte Pfandzustand mittels einer Pfandgutschrift-Kommunikationsnachricht 303 an die Steuereinrichtung 103 übermittelt wird und der deaktivierte Pfandzustand in dem Identifizierer 104 bzw. in der Steuereinrichtung 103, welche die Identifizierer 104 verwaltet, gespeichert wird.

Sobald die Steuereinrichtung 103 feststellt, dass der Pfandstatus in dem Identifizierer 104 aktiv ist und der Identifizierer 104 indikativ zu der Pfandkategorie des zurückgegebenen Pfandguts 105, initiiert die Ausgabeeinrichtung 304 eine Auszahlung der Pfandgutschrift 302 an den Benutzer 110.

Ferner kann zwischen der Rückgabeeinrichtung 301 und der Ausgabeeinrichtung 104 eine Überprüfungseinrichtung 305 verknüpft werden, mittels welcher überprüft wird, ob das übergebene Pfandgut 105 der im Identifizierer 104 gespeicherten Pfandkategorie des Pfandguts 105 entspricht.

Die Überprüfungseinrichtung 305 kann beispielsweise einen Scanner aufweisen, welcher beispielsweise ein Produktdatenblatt bzw. Produktlabel des Pfandguts 105 einscannt. Beispielsweise kann eine Produktnummer, ein EAN (European Article Number)- Code oder direkt aufgedruckte Produktkategorien (Li-Ionen Akku für Lithium-Iionen Batterien) eingescannt und über Texterkennung digitalisiert werden. Ferner kann durch Aufnahme eines Fotos durch die Überprüfungseinrichtung 305 mittels Bilderkennung oder durch eine Person verifiziert werden, ob das zurückgegebene Pfandgut 105 der auf dem Identifizierer 104 gespeicherten Pfandkategorie entspricht. Bei Bestätigung der Überprüfungseinrichtung 305, dass es sich bei dem zurückgegebenen Pfandgut 105 um eine Pfandkategorie auf den Identifizierer 104 handelt, kommuniziert die Überprüfungseinrichtung 305 mit der Steuereinrichtung 103 zur Freigabe einer Auszahlung der Pfandgutschrift 302.

Nach Übergabe der Berechtigung an dem Pfandgut 105 auf einen Benutzer 110 kann der Pfandstatus nicht sofort, sondern erst nach Ablauf einer Zeitdauer Δt aktiviert werden. Damit kann beispielsweise der Ablauf von Rückgabe- und Garantiefristen abgewartet werden, bis zu welchem der Benutzer 110 das Pfandgut 105 bei der Bezugseinrichtung 102 (d. h. im Händler), die dann beispielsweise als Rückgabeeinrichtung 301 fungiert, umtauschen kann. So kann beispielsweise verhindert werden, dass der Benutzer 110 noch in der Rückgabefrist bzw. der Garantiefrist das Pfandgut 105 bei einer anderen Rückgabeeinrichtung 304 zurückgibt und sich die Pfandgutschrift 302 über eine angeschlossene Ausgabeeinrichtung 304 auszahlen lässt. Auch bei Online-Käufen kann die Rückzahlung zwischen dem Benutzer 110 und dem Online-Kaufhaus als Bezugseinrichtung 102 vereinfacht werden, da bis zur Rückgabe kein Pfandstatus aktiviert und deaktiviert werden muss und somit eine Kommunikation zu der Steuereinrichtung 103 unnötig ist.

An der Rückgabeeinrichtung 301 kann der Benutzer 110 das Pfandgut 105 abgeben, indem beispielsweise der Identifizierer 104 als Klebeetikett auf dem Pfandgut 105, beispielsweise der Batterie, aufgeklebt ist. Alternativ kann der Benutzer 110 auf seinem Nutzer-Endgerät 202 den Identifizierer 104, beispielsweise als QR-Code 201, vorzeigen. Weiter alternativ kann der Benutzer 110 den losen Identifizierer 104 losgelöst vom Pfandgut 105 an der Rückgabeeinrichtung 301 abgeben.

An der Rückgabeeinrichtung 301 kann beispielsweise der Identifizierer 104 mit einer entsprechenden Applikation bzw. einer Software (beispielsweise einer Business-App) eingescannt werden und die Daten weiter an die Überprüfungseinrichtung 305 und die Steuereinrichtung 103 weitergeleitet werden. Die Rückgabeeinrichtung 301 und die Überprüfungseinrichtung 305 können in einer entsprechenden Applikation bzw. einer Software (beispielsweise einer Business-App) kombiniert werden. Anhand von Produktinformationen oder Beispielfotos des Pfandguts 105 kann verifiziert werden, ob die korrekte Pfandkategorie, welche im Identifizierer 104 abgespeichert ist, zurückgegeben wurde.

Die Einrichtungen, beispielsweise die Bereitstellungseinrichtung 101 (Hersteller), die Bezugseinrichtung 102 (Händler), die Steuereinrichtung 103, die Rückgabeeinrichtung 301 (Recyclinghof oder Händler), die Überprüfungseinrichtung 305 und/oder die Ausgabeeinrichtung 304 können mit einem gemeinsamen Verwaltungsprogramm bzw. einer Software ausgestattet sein und über diese gemeinsam über das Kommunikationsnetzwerk 109 kommunizieren, um Daten betreffend den Identifizierer 104 und den entsprechenden Pfandstatus zu verwalten. Entsprechende Applikationen (Apps) können auf den jeweiligen Endgeräten der Einrichtungen zur Verfügung gestellt werden. In diesem Netzwerk können sich die oben genannten Einrichtungen registrieren. Somit können von jeder Einrichtung die Identifizierer 104 ausgelesen werden und der korrekte Pfandstatus bestätigt werden. Ferner kann entsprechend der Pfandzustand aktiviert und deaktiviert werden. Beispielsweise ist ebenfalls eine Plausibilitätsprüfung möglich, an welcher Ausgabeeinrichtung 304 wie viel Pfandgutschrift 302 ausbezahlt wurde oder auch von welchem Händler als Bezugseinrichtung 102 wie viele Identifizierer 104 bezogen wurden.

Getrennt zu dem oben beschriebenen Netzwerk der Einrichtungen, kann eine beschriebene Benutzer Applikation (App) an einem Nutzer Endgerät 202 installiert sein, wobei die Benutzer Applikation den Identifizierer 104 und den entsprechenden Pfandzustand auslesen kann und entsprechend Produktinformationen bzw. Fotos von dem Produkt 401 oder dem Pfandgut 105 zur korrekten Klassifikation der Pfandkategorie aufnehmen kann. Die Benutzer Applikation kann ausschließlich mit der Steuereinrichtung 103 zum Datenaustausch verbunden sein. Alternativ kann die Benutzer Applikation lediglich mit der Rückgabeeinrichtung 301, der Bezugseinrichtung 102 und der Ausgabeeinrichtung 304 verbunden sein, sodass nur eine Interaktion des Benutzers 110 mit den für ihn relevanten Einrichtungen direkt möglich ist.

**Fig. 4** zeigt eine weitere beispielhafte Ausführungsform des Verfahrens und der Anordnung zum Verwalten von Identifizierer 104, welche indikativ für das Pfandgut 105 sind, wobei das Pfandgut 105 in einem Produkt 401 integriert bzw. eingebaut ist. Insbesondere kann das Pfandgut 105 fest, d. h. nicht austauschbar, in dem Produkt 401 eingebaut sein und gegebenenfalls nicht von außen durch den Benutzer 110 erkennbar sowie entnehmbar sein. In diesem Fall kann beispielsweise der Identifizierer 104 getrennt von dem Pfandgut 105 dem Benutzer 110 bereitgestellt werden, sodass dieser bei Rückgabe des Produkts 401 die Pfandgutschrift 302 des eingebauten Pfandguts 105 zurückerhalten kann.

Der Identifizierer 104 kann ferner mit dem Produkt 401 bezogen werden, wobei der Identifizierer 104 insbesondere eine Produktkategorie des Produkts 401 speichert. Somit kann sichergestellt werden, dass der Benutzer 110 das Pfandgut 104 zusammen mit dem Produkt 401 zurückgibt, für welches Produkt er ursprünglich das Pfandgut 105 bezogen hat. Somit können beispielsweise Rückgabeerfordernisse für bestimmte Produktgruppen, die ein bestimmtes Pfandgut 104 eingebaut haben, aufgestellt werden. Ein Trennen des Pfandguts 105 von dem Produkt 401 und ein entsprechend getrenntes zurückgeben des Pfandguts 105 separat vom Produkt 401 kann somit verhindert werden.

Insbesondere kann eine Vielzahl von Pfandgütern 105 in dem Produkt einbaut werden, wobei zu jedem der Pfandgüter 105 ein zugehöriger Identifizierer 104 indikativ für die entsprechende Pfandkategorie bezogen wird. Somit kann ein Produkt 401 mit einer Vielzahl von Pfandgütern 105 ausgestattet sein, wobei zu jedem Pfandgut 105 eine individuelle Pfandkategorie bzw. ein individueller Pfandwert 302 zugeordnet werden kann. Der Benutzer 110 kann somit bei Bezug des Produkts 401 mehrere Identifizierer 104 erhalten. Beispielsweise kann der Benutzer 110 auch einen sogenannten Master Identifizierer 104 erhalten, indem die Vielzahl von Pfandgüter 105 bzw. deren Pfandkategorien hinterlegt sind. Bei Rückgabe der Identifizierer 104 an der Rückgabeeinrichtung 304 kann der Benutzer die Pfandgüter 105 mit dem verknüpften Identifizierer 104 bzw. Identifizierern 104 einzeln oder gesammelt zurückgeben.

Die Bezugseinrichtung 102 kann gemäß dem Ausführungsbeispiel in Fig. 4 somit ein Produkt 401 zusammen mit einem oder einer Vielzahl von Pfandgüter 105 von der Bereitstellungseinrichtung 101 beziehen. Entsprechend bezieht die Bezugseinrichtung 102 von der Steuereinrichtung 103 die entsprechenden Identifizierer 104 gegen Entrichtung eines Pfandwerts. Die Identifizierer 104 können vorab oder erst dann bezogen werden, wenn der Benutzer 110 das Produkt 401 von der Bezugseinrichtung 102 bezieht. Nach Bezug des Produkts 401 wird dieses an der Übergabeeinrichtung 106 an den Benutzer 110 zusammen mit den Identifizierern 104 übergeben. Der Benutzer 110 kann anschließend das Produkt benutzen und die Identifizierer 104 virtuell oder physisch bis zur Rückgabe des Produkts 401 speichern bzw. lagern. Nach einer gewissen Zeitdauer Δt, insbesondere nach Ablauf einer Rückgabefrist, kann der Pfandstatus des Identifizierers 104 in dem Produkt 401 aktiviert werden. Mit dem aktivierten Pfandstatus des Identifizierers 104kann der Benutzer 110 nach Benutzung des Produkts 401 dieses an der Rückgabeeinrichtung 301, beispielsweise einen Recyclinghof, zurückgeben. An der Rückgabeeinrichtung 301 kann das Produkt 401 zusammen mit dem Pfandgut 105 und dem zugehörigen Identifizierer 104, welcher indikativ zu der Produktkategorie des Produkts 401 und/oder der Pfandkategorie des Pfandguts 104 ist, zurückgegeben werden. In einer angeschlossenen Überprüfungseinrichtung 305 wird überprüft, ob in dem Produkt 401 die korrekt zugeordneten Pfandgüter 105 mit der korrekten Pfandkategorie der Pfandgüter 105, z.B. der die richtige Produktkategorie der Pfandgüter 105, sowie die korrekt zugeordnete Produktkategorie des Produkts 401 vorliegen. Diese Informationen kann die Überprüfungseinrichtung 305 aus dem Identifizierer 104 entnehmen. Nach Überprüfung in der Überprüfungseinrichtung 305 kann eine entsprechende Freigabe und Weiterleitung des aktiven Pfandzustands an die Steuereinrichtung 103 kommuniziert werden. Die Steuereinrichtung 103 gibt eine entsprechende Freigabe an die Ausgabeeinrichtung 304 weiter, welche die Auszahlung der Pfandgutschrift 302 initiiert. Nach Auszahlung sendet die Ausgabeeinrichtung 304 eine entsprechende Pfandgutschrift-Kommunikationsnachricht 303 an die Steuereinrichtung 103, welche den Pfandzustand in dem entsprechenden Identifizierer 104 deaktiviert, sodass kein weiteres Einlösen einer Pfandgutschrift 302 mit diesem Identifizierer 104 möglich ist.

In dem dargestellten Beispiel ist das Produkt 401 ein E-Bike, welches einen entsprechenden Lithium-Ionen-Akku als Pfandgut 105 aufweist. Durch die Verknüpfung des Pfandguts 105, d. h. des Lithium-Ionen-Akkus, zu dem Produkt 401 bzw. der Produktkategorie des Produkts und der entsprechenden Verknüpfung des Pfandguts zu der Pfandkategorie (z.B. der Produktkategorie des Pfandguts 105) und der entsprechenden Sicherung in dem Identifizierer 104 kann Missbrauch verhindert werden, indem beispielsweise verhindert wird, dass bei Rückgabe des E-Bikes an der Rückgabeeinrichtung 301 diese mit anderen bzw. minderwertigen Akkus (z.B. Nickel-Cadmium anstellt von Lithium-Ionen Akkus) als Pfandgut 105 zurückgeben werden. Mit dem erfindungsgemäßen System wird sichergestellt, dass die Pfandgüter 105 (bzw. Pfandgüter 105 der passenden Kategorie) retourniert werden für die tatsächlich auch das Pfand bezahlt wurde.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste:

- 101: Bereitstellungseinrichtung
- 102: Bezugseinrichtung
- 103: Steuereinrichtung
- 104: Identifizierer
- 105: Pfandgut
- 106: Übergabeeinrichtung
- 107: Aktivierungs-Kommunikationsnachricht
- 108: Aktivierungs- Komm unikationsnachricht

- 109: Kommunikationsnetzwerk
- 110: Benutzer

- 201: Barcode
- 202: Nutzer-Endgerät

- 301: Rückgabeeinrichtung
- 302: Pfandgutschrift
- 303: Pfandgutschrift-Kommunikationsnachricht
- 304: Ausgabeeinrichtung
- 305: Überprüfungseinrichtung

- 401: Produkt

- Δt: Zeitdauer

## Patentansprüche

1. Verfahren zum Verwalten von Identifizierer (104), welche indikativ für ein Pfandgut (105) sind, wobei das Verfahren aufweist:
Bereitstellen des Pfandguts (105);
Beziehen eines Identifizierers von einer Steuereinrichtung (103) gegen Entrichtung eines Pfandwerts der indikativ für eine Pfandkategorie des Pfandguts (105) ist, so dass der Identifizierer (104) die Pfandkategorie des Pfandguts (105) speichert,
Beziehen des Identifizierers mit dem Pfandgut (105) bei Bezug des Pfandguts (105) durch einen Benutzer (110),
Übergabe einer Berechtigung an dem Pfandgut (105) mit dem bezogenen Identifizierer (104) an den Benutzer (110).

2. Verfahren gemäß Anspruch 1,
wobei eine Vielzahl von Identifizierer (104) von der Steuereinrichtung (103) gegen Entrichtung eines Pfandwerts der indikativ für eine Pfandkategorie des Pfandguts (104) bezogen werden,
wobei bei Bezug des Pfandguts (105) durch den Benutzer (110) einer der Vielzahl von Identifizierer (104) mit dem Pfandgut (105) übergeben wird.

3. Verfahren gemäß Anspruch 1 oder 2,
wobei bei oder nach Übergabe der Berechtigung an dem Pfandgut (105) mit dem übergebenen Identifizierer (104) an den Benutzer (110) der Identifizierer (104) an dem Pfandgut (105), insbesondere mittels Klebens, an dem Pfandgut (105) befestigt wird.

4. Verfahren gemäß einem der Ansprüche 1 bis 3,
wobei bei oder nach Übergabe der Berechtigung an dem Pfandgut (105) mit dem übergebenen Identifizierer (104) an den Benutzer (110) der Identifizierer (104) getrennt von dem Pfandgut (105) vorliegt, und/oder
wobei bei oder nach Übergabe der Berechtigung an dem Pfandgut (105) mit dem übergebenen Identifizierer (104) an den Benutzer (110) der Identifizierer (104) in einem Nutzer-Endgerät (202) gespeichert wird.

5. Verfahren gemäß einem der Ansprüche 1 bis 4,
wobei vor, bei oder nach Übergabe der Berechtigung an dem Pfandgut (105) auf einen Benutzer, ein Pfandstatus des Identifizierers (104) aktiviert wird, wobei der Pfandstatus des Identifizierers (104) insbesondere einem Nutzer-Endgerät (202) gespeichert wird und/oder an die Steuereinrichtung (103) übermittelt wird,
wobei insbesondere nach Übergabe der Berechtigung an dem Pfandgut (105) auf einen Benutzer, der Pfandstatus des Identifizierers (104) nach Ablauf einer Zeitdauer (Δt), insbesondere von zwei Wochen oder einem Monat, aktiviert wird.

6. Verfahren gemäß einem der Ansprüche 1 bis 5,
wobei das Aktivieren des Identifizierers (104) ausgelöst bei oder nach Übergabe der Berechtigung an dem Pfandgut (105) durch ein Übermitteln einer Aktivierungs-Kommunikationsnachricht (107) an die Steuereinrichtung (103) erfolgt, und/oder
wobei das Übergeben des Identifizierers mit dem Pfandgut (105) bei Bezug des Pfandguts (105) durch einen Benutzer (110) basierend auf einem Lieferort des Pfandguts (105) durchgeführt wird, und/oder
wobei der Übergang der Berechtigung an dem Pfandgut (105) auf den Benutzer (110) durch Ausgabe des Pfandguts (105) an den Benutzer (110) in einem Ladengeschäft oder durch ein Transportunternehmen vorgenommen wird.

7. Verfahren gemäß einem der Ansprüche 1 bis 6, ferner aufweisend nach der Übergabe der Berechtigung an dem Pfandgut (105) mit dem übergebenen Identifizierer (104) an den Benutzer,
Übergabe des Pfandguts (105) zusammen mit dem übergebenen Identifizierer (104) an eine Rückgabeeinrichtung (301), und
Auslösen einer Pfandgutschrift von einer Ausgabeeinrichtung (304), wenn der an der Rückgabeeinrichtung (301) erkannte Identifizierer (104) einen aktiven Pfandstatus des Identifizierers (104) anzeigt,
wobei insbesondere bei Übergabe des Pfandguts (105) mittels einer Überprüfungseinrichtung (305) geprüft wird, ob das übergebene Pfandgut (105) an die Rückgabeeinrichtung (301) der im Identifizierer (104) gespeicherten Pfandkategorie des Pfandguts (105) entspricht,
wobei insbesondere nach Auslösen einer Pfandgutschrift durch die Ausgabeeinrichtung (304) der Pfandstatus des Identifizierers (104) deaktiviert wird und der deaktivierte Pfandzustand in dem Identifizierer (104) gespeichert wird,
wobei der deaktivierte Pfandzustand mittels einer Pfandgutschrift-Kommunikationsnachricht (303) an die Steuereinrichtung (103) übermittelt wird.

8. Verfahren gemäß einem der Ansprüche 1 bis 7,
wobei das Pfandgut (105) in einem Produkt (401) eingebaut ist.

9. Verfahren gemäß Anspruch 8, wobei das Verfahren ferner aufweist
Übergeben des Identifizierers mit dem Produkt (401),
wobei der Identifizierer (104) insbesondere eine Produktkategorie des Produkts (401) speichert,
wobei insbesondere eine Vielzahl von Pfandgütern (105) in dem Produkt (401) einbaut sind,
wobei zu jedem der Pfandgüter (105) ein zugehöriger Identifizierer indikativ für die entsprechende Pfandkategorie übergeben wird.

10. Verfahren gemäß einem der Ansprüche 7 bis 9, ferner aufweisend
Übergabe des Produkts zusammen mit dem Pfandgut (105) und dem Identifizierer (104) an eine Rückgabeeinrichtung (301), und
Auslösen einer Pfandgutschrift an eine Ausgabeeinrichtung (304), wenn der an der Rückgabeeinrichtung (301) erkannte Identifizierer (104) einen aktiven Pfandstatus des Identifizierers (104) anzeigt,
wobei insbesondere bei Übergabe des Produkts (401) mittels einer Überprüfungseinrichtung (305) geprüft wird, ob das übergebene Produkt (401) der im Identifizierer (104) gespeicherten Produktkategorie des Produkts entspricht.

11. Anordnung zum Verwalten von Identifizierern (104), welche indikativ für Pfandgüter (105) sind, wobei die Anordnung aufweist:
eine Bereitstellungseinrichtung (101) zum Bereitstellen des Pfandguts (105);
eine Steuereinrichtung (103), welche zumindest einen Identifizierer (104) bereitstellt und verwaltet,
wobei die Steuereinrichtung (103) konfiguriert ist gegen Entrichtung eines Pfandwerts den Identifizierer (104) bereitzustellen,
wobei der Identifizierer (104) indikativ für eine Pfandkategorie des Pfandguts (105) ist, so dass der Identifizierer (104) die Pfandkategorie des Pfandguts (105) speichert,
eine Bezugseinrichtung (102), die mit der Bereitstellungseinrichtung (101) und der Steuereinrichtung (103) gekoppelt ist zum Bezug des Pfandguts (105) und des Identifizierers (104),
wobei die Bezugseinrichtung (102) konfiguriert ist zum Beziehen des Identifizierers (104) mit dem Pfandgut (105) bei Bezug des Pfandguts (105) durch einen Benutzer (110), und
eine Übergabeeinrichtung (106) zur Übergabe einer Berechtigung an dem Pfandgut (105) mit dem bezogenen Identifizierer (104) an den Benutzer (110).

12. Anordnung gemäß Anspruch 11,
wobei die Steuereinrichtung (103) mit der Übergabeeinrichtung (106) gekoppelt ist,
wobei die Steuereinrichtung (103) konfiguriert ist, bei oder nach Übergabe der Berechtigung an dem Pfandgut (105) auf einen Benutzer, einen Pfandstatus des Identifizierers (104) durch ein Übermitteln einer Aktivierungs-Kommunikationsnachricht (107) zu aktivieren,
wobei die Steuereinrichtung (103) insbesondere konfiguriert ist nach Übergabe der Berechtigung an dem Pfandgut (105) auf einen Benutzer (110) den Pfandstatus des Identifizierers (104) nach Ablauf einer Zeitdauer (Δt), insbesondere von zwei Wochen oder einem Monat, zu aktivieren,
wobei die Anordnung insbesondere ferner aufweist
ein Nutzer-Endgerät (202), welches mit der Steuereinrichtung (103) gekoppelt ist,
wobei der Pfandstatus des Identifizierers (104) in dem Nutzer-Endgerät (202) speicherbar ist,
wobei insbesondere die Aktivierungs-Kommunikationsnachricht (107) von der Übergabeeinrichtung (106) oder dem Nutzer-Endgerät (202) an die Steuereinrichtung (103) übermittelbar ist,
wobei die Anordnung insbesondere ferner aufweist
eine Rückgabeeinrichtung (301),
welche zur Übergabe des Pfandguts (105) zusammen mit dem bezogenen Identifizierer (104) konfiguriert ist, und
eine Ausgabeeinrichtung (304), welche zum Auslösen einer Pfandgutschrift konfiguriert ist, wenn der an der Rückgabeeinrichtung (301) erkannte Identifizierer (104) einen aktiven Pfandstatus des Identifizierers (104) anzeigt,
wobei insbesondere die Ausgabeeinrichtung (304) mit der Steuereinrichtung (103) derart gekoppelt ist, dass nach Auslösen einer Pfandgutschrift der deaktivierte Pfandzustand mittels einer Pfandgutschrift-Kommunikationsnachricht (303) an die Steuereinrichtung (103) übermittelt wird und der deaktivierte Pfandzustand in dem Identifizierer (104) gespeichert wird.

13. Anordnung gemäß Anspruch 12, ferner aufweisend
eine Überprüfungseinrichtung (305), welche konfiguriert ist bei Übergabe des Pfandguts (105) zu prüfen, ob das übergebene Pfandgut (105) an die Rückgabeeinrichtung (301) der im Identifizierer (104) gespeicherten Pfandkategorie des Pfandguts (105) entspricht, und/oder
wobei der Identifizierer (104) aus einer Gruppe ausgewählt ist, die besteht aus einem QR-Code, einem Barcode, einem Transponder, insbesondere einem RFID-Tag, und einem alphanumerischen Code, und/oder
wobei die Bereitstellungseinrichtung (101), die Bezugseinrichtung (102), das Nutzer-Endgerät (202) die Übergabeeinrichtung (106) und/oder die Steuereinrichtung (103) mittels eines Kommunikationsnetzwerks (109) gekoppelt sind, insbesondere mittels eines drahtlosen Kommunikationsnetzwerks (109), weiter insbesondere mittels eines Mobilfunk-Kommunikationsnetzwerks (109) und/oder mittels des öffentlichen Internets, und/oder
wobei das Pfandgut (105) aus einer Gruppe ausgewählt ist, die besteht aus einer Batterie, insbesondere einer Lithium-Ionen Batterie, einer Pfandflasche, insbesondere einer PET-Pfandflasche, einer Pfanddose, einem Behälter, insbesondere einem Getränkekasten, einer Batterie, einer Textilie, einem Möbel, einer Pfandverpackung, einem Kraftfahrzeug, einer quaderförmigen Verpackung für flüssige Nahrungsmittel oder für niederviskose Nahrungsmittel, einer Dose, einem Verpackungsgebinde, einer Euro-Palette und einem Elektrogerät, insbesondere einem Elektroaltgerät,
wobei das Nutzer-Endgerät (202) insbesondere ein portables Gerät ist, insbesondere ein Mobilfunkgerät, ein Laptop oder ein Tablet PC.

14. Computerlesbares Speichermedium, in dem ein Programm zum Verwalten von Identifizierern (104), welche indikativ für Pfandgüter (105) sind, gespeichert ist, welches Programm, wenn es von einem oder mehreren Prozessoren ausgeführt wird, das Verfahren nach einem der Ansprüche 1 bis 10 ganz oder teilweise ausführt oder steuert.

15. Programm-Element zum Verwalten von Identifizierern (104), welche indikativ für Pfandgüter (105) sind, welches Programm-Element, wenn es von einem oder mehreren Prozessoren ausgeführt wird, das Verfahren nach einem der Ansprüche 1 bis 10 ganz oder teilweise ausführt oder steuert.
